(19) **Europäisches Patentamt / European Patent Office / Office européen des brevets**

(11) **EP 1 419 325 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(21) Anmeldenummer: **02774531.4**

(22) Anmeldetag: **22.08.2002**

(51) Int Cl.:
***F16H 1/32*** *(2006.01)*

(86) Internationale Anmeldenummer:
**PCT/EP2002/009403**

(87) Internationale Veröffentlichungsnummer:
**WO 2003/019041 (06.03.2003 Gazette 2003/10)**

(54) **GETRIEBEBAUREIHE**

SERIES OF GEARBOXES

SERIE DE BOITES DE VITESSES

(84) Benannte Vertragsstaaten:
**AT BE BG CH CY CZ DE DK EE ES FI FR GB GR IE IT LI LU MC NL PT SE SK TR**

(30) Priorität: **23.08.2001 DE 10141435**
**16.05.2002 DE 10221893**

(43) Veröffentlichungstag der Anmeldung:
**19.05.2004 Patentblatt 2004/21**

(73) Patentinhaber: **SEW-EURODRIVE GmbH & Co. KG**
**76646 Bruchsal (DE)**

(72) Erfinder: **CHRIST, Michael**
**76689 Karlsdorf-Neuthard (DE)**

(74) Vertreter: **Tüngler, Eberhard et al**
**Sew-Eurodrive GmbH & Co. KG**
**Abteilung ISI**
**Ernst-Blickle-Straße 42**
**76646 Bruchsal (DE)**

(56) Entgegenhaltungen:
**EP-A- 0 286 760    EP-A- 0 556 587**
**EP-A- 0 687 837    US-A- 5 292 289**

EP 1 419 325 B1

**Beschreibung**

Die Erfindung betrifft eine Getriebebaureihe, bestehend aus einer Vielzahl von Getrieben nach dem Oberbegriff des Patentanspruches 1.

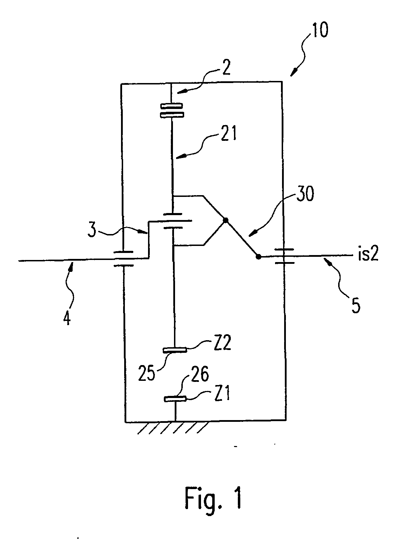

Derartige Getriebe sind beispielsweise aus der Deutschen Druckschrift H. W. Müller (Springer Verlag 1998): "Die Umlaufgetriebe" bekannt. Ihre prinzipielle Wirkungsweise wird anhand der beiliegenden Figur 1 auch zur Definition der nachfolgend verwendeten Begriffe erläutert.

Gemäß Figur 1 ist ein ortsfestes Gehäuse 10 vorgesehen, in welchem konzentrisch zueinander eine erste Welle 4 und eine zweite Welle 5 drehbar gelagert sind. Die erste Welle 4 trägt ein Exzenterelement, auf welchem ein Umlaufrad 21 drehbar gelagert ist. Das Umlaufrad 21 rollt auf einem Hohlrad 2 ab, das mit dem Gehäuse 10 fest verbunden ist und kämmt dabei mit seinen Zähnen 25 mit den Zähnen 26 des Hohlrades 2. Das Umlaufrad 21 steht über ein Abtriebssystem 30 in einer drehfesten Verbindung mit der zweiten Welle 5 derart, daß die durch das Abwälzen auf dem Hohlrad 2 erzeugte Drehung des Umlaufrades 21 unabhängig von der exzentrischen Umlaufbewegung des Umlaufrades 21 auf die zweite Welle 5 übertragen wird. Das Übersetzungsverhältnis ist zwischen dem Drehwinkel (bzw. der Drehzahl) der ersten Welle 4 und der zweiten Welle 5 wird durch die Anzahl $z_1$ der Zähne 26 des Hohlrads 2 und die Anzahl $z_2$ der Zähne 25 des Umlaufrades 21 bestimmt.

Derartige zweiwellige Umlaufgetriebe werden üblicherweise aus einer Kombination eines offenen Plusgetriebes mit Triebstockverzahnung und einem Antriebssystem aufgebaut, das eine Gelenkwelle oder ein Parallelzapfengetriebe oder ein Parallelkurbelgetriebe oder ein Abtriebssystem nach dem Doppelkreuzprinzip umfaßt. Die Zähne 26 des Hohlrades werden hierbei als Außenrollen der Triebstockverzahnung ausgebildet während die Zähne 25 des Umlaufrades 21 als "Zähne" einer Epi-, Hypo- oder Perizykloidenkurvenscheibe oder als Verzahnung ausgebildet werden, die mit einer Zahnstange erzeugt wurde. Abstrakter ausgedrückt werden die Zähne mit einem Werkzeug mit unendlich großem Rollkreisdurchmesser erzeugt, der auf einem Grundkreis abwälzt. In diesem letztgenannten Fall ist die Verzahnung eine Evolvente.

Es sei aber an dieser Stelle unterstrichen, daß sich die vorliegende Erfindung auch auf Getriebe bezieht, bei denen die ein- und die abtreibende Welle nicht parallel sind, also auch Winkelgetriebe, gerad- oder spiroidverzahnte Kegelradgetriebe usw. Die Verzahnungen können auch derart modifiziert werden mit Flanken-, Fuß- und/oder Kopfkorrekturen, daß im praktischen, nicht-exakt-mathematischen Getriebe die Laufruhe, Geräuschbildung und/oder Ein- und Austrittsstöße optimiert bzw. minimiert werden.

Aus obigem ist ersichtlich, daß derartige Getriebe einen nicht unerheblichen Fertigungsaufwand mit sich bringen.

Bei allen Getrieben, so auch bei Getrieben der eingangs beschriebenen Art, tritt das Problem auf, daß - je nach Anwendungsfall - eine bestimmte Übersetzung (bzw. Untersetzung) gegeben sein muß, das Getriebe ein bestimmtes maximales Dreh-moment übertragen können muß und bei der Übertragung des Drehmomentes eine bestimmte maximale Welligkeit des Drehmomentes entsprechend einer Laufunruhe sowie eine bestimmte maximale Geräuschbildung gefordert werden.

Es hat sich zwar gezeigt, daß eine "Gruppeneinteilung" erfolgen kann, die trotz großer Forderungsbereiche zu einer endlichen Anzahl von Getrieben führen, welche hinsichtlich der geforderten Eigenschaften den Anwendern genügen. Dennoch ergibt sich ein erheblicher Bauaufwand dann, wenn man jedes der Getriebe individuell fertigt. Aus diesem Grund wird versucht, Getriebebaureihen zu entwickeln, bei welchen Einzelbauteile, zum Beispiel Gehäuse oder Gehäuseabschnitte, Räder, Wellen oder dergleichen mehrfach verwendet werden. Im einfachsten Fall werden beispielsweise in ein und dasselbe Gehäuse Zahnradpaare mit verschiedenen Zähnezahlen aber einer gleichbleibenden Summe der Zahnraddurchmesser zur Erzielung verschiedener Übersetzungsverhältnisse eingebaut.

Aus der EP-A-0 687 837, der EP-A-0 556 587 und der US-A-5 292 289 sind zweiwellige rückkehrende Umlaufgetriebe bekannt, wobei insbesondere die US-A-5 292 289, welche den Nächstliegenden Stand der Technik bildet, eine Getriebebaureihe vorstellt, bei der verschiedene Zykloscheiben so einsetzbar sind, dass verschiedene Übersetzungen hergestellt werden können. Die Anzahl der Nuten der Zykloscheiben bleibt hierbei gleich. Die Druckschrift beschreibt weiterhin, wie eine erhöhte Laufruhe dadurch hergestellt werden kann, dass der Eingriffspunkt der Verzahnung in Richtung des Zahnfußes verschoben wird.

Der Erfindung liegt die Aufgabe zugrunde, eine Getriebebaureihe der eingangs genannten Art aufzuzeigen, bei welcher mit einer möglichst geringen Anzahl von Einzelbauteilen eine möglichst große Vielzahl von verschiedenen Eigenschaften, insbesondere hinsichtlich der Übersetzungsabstufung in einfacher Weise erzielbar ist bzw. ein Verfahren zum Herstellen einer derartigen Getriebebaureihe aufzuzeigen.

Diese Aufgabe wird vorrichtungsmäßig durch die im Anspruch 1 aufgezeigten Merkmale und verfahrensmäßig durch das Verfahren nach Anspruch 41 gelöst.

Es wird nachfolgend eine Getriebebaureihe von ein- oder mehrstufigen Getrieben beschrieben, die mindestens eine Baugröße umfasst, welche wiederum eine oder mehrere Varianten umfasst. Jede Variante umfasst mindestens eine Getriebestufe nach Art einer zweiwelligen, rückkehrenden Umlaufgetriebestufe, umfassend eine Kombination eines offenen Plusgetriebes mit Triebstockverzahnung, mindestens ein Umlaufrad und ein Abtriebsystem. Der Triebstockverzahnung ist eine Anzahl z1 von Rollen zuordenbar. Eine Zähnezahl z2 ist mindestens einem Umlaufrad zuordenbar. Innerhalb der Baugröße umfasst die mit Index i kennzeichenbaren Anzahlen z1 Index i der Varianten dieser Baugröße und die mit Index j kennzeichenbaren Zähnezahlen z2 Index j dieser Varianten der Baugröße eine Matrix M Index ij = (zl Index i, z2 Index j) bilden, insbesondere eine mit ij zweifach indizierte Matrix. Die Matrix umfasst mit Index k kennzeichenbare Teilsequenzen S Index k, wobei die Varianten innerhalb der jeweiligen Teilsequenz S Index k Nuten in ein Gehäuseteil zum Lagern der Außenrollen einen relativen Winkel p x 360°/N aufweisen, wobei p eine natürliche Zahl, wie 1, 2, 3, 4 oder dergleichen ist, und N eine natürliche Zahl ist, durch eine bestimmte Anzahl z1 kennzeichenbar sind, p = N/z1 ist und derart verschiedene Zähnezahlen z2 aufweisen, dass die Differenzen z1 - z2 eine arithmetische Folge, insbesondere eine endliche und nicht triviale arithmetische Folge darstellen.

Die Matrix M Index ij umfasst vorzugsweise eine Anzahl von fünf bis zehn solcher Teilsequenzen und ist besonders bevorzugter weise nur aus solchen Teilsequenzen zusammengesetzt.

Bei als 2- oder mehrstufiges Getriebe ausgeführten Varianten ist innerhalb einer Baugröße für zwei Getriebestufen jeweils eine Matrix Mij mit Teilsequenzen derart ausgeführt, dass mindestens eine Teilsequenz vorgesehen ist. Alternativ oder zusätzlich ist bei beiden Getriebestufen die Anzahl z1 gleich und die Kurvenscheiben mit Zähnezahl z2 sind bei beiden Getriebestufen verwendbar bzw. gemeinsam fertigbar.

Innerhalb einer Baugröße ist jeweils eine Matrix M Index ij für zwei Getriebestufen mit Teilsequenzen derart ausgeführt, dass alle Teilsequenzen der beiden Getriebestufen gemeinsame Teilsequenzen sind.

Erfindungsgemäß weisen innerhalb einer Baugröße mindestens zwei Varianten verschiedene Zähnezahlen auf, die Anzahl N der Nuten zum Lagern der Außenrollen ist als Produkt von mehr als zwei Primfaktoren darstellbar und mindestens zwei Varianten weisen verschiedene Anzahlen z1 von Triebstöcken bzw. Außenrollen auf, wobei bei diesen Varianten die Anzahl z1 von Triebstöcken der Anzahl N der Nuten gleicht oder einem (kombinatorisch möglichen) Teilprodukt dieser Primfaktoren gleicht.

Die Anzahl z1 der Außenrollen entspricht N / p, so dass nur diejenigen Nuten im Gehäuseteil ausgeformt und bearbeitet sind, in denen Außenrollen vorgesehen sind.

Die zweiwellige, rückkehrende Umlaufgetriebestufe umfasst eintriebsseitig eine sich drehende Stegwelle bei einer ersten Ausführungsform der Erfindung. Sie kann auch als Excentergetriebestufe oder als Zyklogetriebestufe ausgebildet sein, wobei mit der Stegwelle ein Excenter verbunden ist, der mindestens eine Kurvenscheibe antreibt, bei der Triebstockverzahnung sind als Triebstöcke die Anzahl z1 von kreisförmig angeordneten Außenrollen vorgesehen, die mit einer Anzahl z2 von Zähnen der mindestens einen Kurvenscheibe zusammenwirken und deren Drehbewegung auf die Abtriebswelle übertragen und in einen Gehäuseteil mit einer Anzahl von Nuten gelagert sind.

Vorzugsweise sind innerhalb einer Baugröße bei mindestens zwei Varianten das selbe Gehäuseteil mit Nuten zum Lagern der Außenrollen vorgesehen. Vorzugsweise werden die selben Außenrollen von den beiden Getriebestufen verwendet.

Vorzugsweise ist bei mindestens einer Variante die Abtriebswelle gleichzeitig als Zykloscheibenträger einer weiteren Zyklogetriebestufe ausgebildet, um so eine spielfreie Verbindung der beiden Zyklogetriebestufen zu erreichen.

Vorzugsweise weisen die Varianten einer Teilsequenz mit abnehmender Anzahl z1 eine zunehmende Exzentrizität der Zyklogetriebestufe auf und/oder abnehmende Durchmesser der Mitnehmerbolzen und/oder eine nicht-abnehmende Anzahl von Kurvenscheiben auf. Dadurch werden die Laufeigenschaften der Getriebe verbessert.

Vorzugsweise umfasst die gesamte, zur Verwendung vorgesehene Baureihe bei gleicher Umlaufübersetzung nur Varianten mit betragsmäßig möglichst kleiner Differenz | z1 - z2 |.

Bei der Verwendung von Spezialhülsen bei der ersten Zähnezahl z1 wird vorzugsweise ein Hohlrad mit Nuten zur Aufnahme von ersten, dicken Außenrollen mit Durchmesser d eingesetzt und bei den weiteren Zähnezahlen z1, die größer sind als die ersten Zähnezahlen z1, werden dünnere Außenrollen als die ersten dicken Außenrollen verwendet, wobei die dünneren Außenrollen in entsprechend dicken Hülsen mit Durchmessern d gelagert sind, so dass die dicken Hülsen passgenau in die aufnehmenden Nuten, insbesondere Bohrungen des Hohlrades eingefügt sind.

Weiterhin wird eine Getriebebaureihe beschrieben, die aus einer Vielzahl von Getrieben besteht, die jeweils mindestens eine Getriebestufe nach Art von zweiwelligen rückkehrenden Umlaufgetrieben, umfassend eine Kombination eines offenen Plusgetriebes mit Triebstockverzahnung und ein Abtriebssystem aufweisen, umfassend eine oder mehrere Baugrößen, die jeweils Gehäuse mit darin angeordneten Hohlrädern, gebildet aus einer Anzahl $z_0$ von Nuten und eine erste Anzahl $z_1$ von darin gelagerten Außenrollen aufweisen, mehrere Varianten der Baugröße zur Bildung verschiedener Übersetzungsverhältnisse und/oder zur Übertragung verschiedener Maximaldrehmomente zwischen einer ersten Welle und einer zu dieser zentrischen zweiten Welle umfassen, mit Umlaufrädern, insbesondere Kurvenscheiben, die jeweils eine zweite Anzahl $z_2$ von Zähnen aufweisen und über das Abtriebssystem mit der zweiten Welle drehfest verbunden sind, wobei bei einer ersten Alternative die mehreren Varianten jeweils Umlaufräder mit voneinander verschiedenen zweiten Anzahlen $z_2$ von Zähnen aufweisen und die Differenz $z_1-z_2$ der ersten Anzahl $z_1$ und der zweiten Anzahl $z_2$ der jeweiligen Umlaufräder der Varianten eine arithmetische Folge, insbesondere eine nichttriviale arithmetische Folge bilden und wobei bei einer zweiten Alternative die Anzahl $z_0$ der Nuten ein Produkt aus einer Anzahl k>1 von Primfaktoren ist und die mehreren Varianten jeweils Hohlräder umfassen, bei denen in den Nuten unter regelmäßigem Fortlassen von einzelnen Außenrollen oder von Gruppen von Außenrollen in jeweils voneinander verschiedenen equidistanten Abständen Außenrollen gelagert sind und/oder die mehreren Varianten wieder nach der ersten Alternative ausgebildet sind, also die mehreren Varianten jeweils Umlaufräder mit voneinander verschiedenen zweiten Anzahlen $z_2$ von Zähnen aufweisen und die Differenz $z_1-z_2$ der ersten Anzahl $z_1$ und der zweiten Anzahl $z_2$ der jeweiligen Umlaufräder der Varianten eine arithmetische Folge, insbesondere eine endliche nichttriviale arithmetische Folge, bilden.

Bei der ersten Alternative sind also in allen Nuten Außenrollen gelagert, auf welchen die Umlaufräder mit ihren Zähnen abrollen. Die Getriebebaureihe erhält dadurch ihre feine Abstufung, daß die Differenz der Zähnezahl eine arithmetische Folge bildet, so daß sich Standardübersetzungen durch geeignete Wahl der Zähnezahl so variieren lassen, daß sich gleiche Umlaufübersetzungen nach folgender Formel ergeben:

$$i_{s2} = n*z_2/(n*(z_2-z_1)), \text{ mit } n = 1, 2, 3, \ldots$$

Die folgende Tabelle zeigt ein Beispiel hierfür:

| | | | | |
|---|---|---|---|---|
| $i_{s2}$ (Umlaufübersetzung) | -8 | -8 | -8 | -8 |
| $z_1$ (Außenrollen) | 9 | 18 | 36 | 72 |
| $z_2$ (Zähnezahl Umlaufrad) | 8 | 16 | 32 | 64 |

Bei der zweiten Alternative der erfindungsgemäßen Lösung, die zusätzlich zur ersten Alternative verwendbar ist, werden nicht alle Nuten des Hohlrades mit Außenrollen "gefüllt" oder es werden auch nicht alle (regelmäßig angeordnete) Nuten vorgesehen, so dass die Anzahl der Zähne des Hohlrades vermindert wird. Hierzu wieder ein Beispiel: $z_1$ (Anzahl der Außenrollen) = 36 = const.

| | | | | | |
|---|---|---|---|---|---|
| $i_{s2}$ (Umlaufübersetzung) | -8 | -11 | -17 | -35 | -71 |
| $z_1$ (Außenrollen) | 36 | 36 | 36 | 36 | 36 |
| $z_2$ (Zähnezahl Umlaufrad) | 32 | 33 | 34 | 35 | 71 |

Bei dieser Tabelle wurde beachtet, daß jede zweite Außenrolle der 72 Außenrollen ($i_{s2}$=71) am Umfang eingespart werden kann. Somit erhält man in diesem Fall wiederum 36 Außenrollen. Also kann das zugehörige Gehäuseteil mehrfach innerhalb einer Baugröße verwendet werden. Es ist dann auch für eine Kurvenscheibe mit 71 Zähnen verwendbar.

In Verallgemeinerung kann statt jeder zweiten Außenrolle beispielsweise nur jede n-te Außenrolle verwendet werden, falls die Anzahl von Außenrollen einen entsprechenden ganzzahligen Teiler aufweist. Also können beispielsweise 2 von 3 Außenrollen weggelassen werden oder 3 von 4 usw.

Umgekehrt ist auch ein Gehäuseteil einsetzbar, bei dem beispielsweise statt 36 Außenrollen nur 18 Außenrollen oder 12 Außenrollen eingesetzt sind. Die zugehörige Kurvenscheibe weist dann 12 oder 11 Zähne auf. In Verallgemeinerung kann man also so viele Außenrollen weglassen, daß nur eine ganzzahlige Zahl $z_1/n$ mit n = 2, 3, 4, ... übrigbleibt.

Aus obigem ist ersichtlich, daß die vorliegende Erfindung in ihrer ersten Alternative unabhängig davon ist, ob eine Triebstockverzahnung oder eine andere Verzahnungsart vorliegt, bei welcher keine Zähne einfach "fortgelassen" werden können.

Bei einer ersten bevorzugten Ausführungsform ist das Antriebssystem entweder als ein Parallelzapfengetriebe mit einer Übersetzung von m=1 oder als ein Parallelkurbelgetriebe, das einem Parallelzapfengetriebe gleichwertig ist oder aber als Antriebssystem nach dem Doppelkreuzprinzip ausgebildet. In der nachfolgenden Beschreibung wird im allgemeinen von einem Parallelzapfengetriebe ausgegangen, wobei der hier tätige Fachmann schon aufgrund seines Lehrbuchwissens dazu in der Lage ist, hieraus auch ein Parallelkurbelgetriebe oder ein Antriebssystem nach dem Doppelkreuzprinzip zu bilden.

Vorzugsweise ist die Getriebestufe (die nach Art eines Umlaufgetriebes ausgebildet ist) ein Zyklogetriebe, wobei das Umlaufrad als Kurvenscheibe ausgebildet ist. Derartige Getriebe haben einen besonders hohen Wirkungsgrad und sind weit von einer Selbsthemmung entfernt, so daß sie in beiden Richtungen (Über- und Untersetzung) verwendbar sind. Darüber hinaus können derartige Getriebe extrem spielarm gefertigt werden.

Wenn man lediglich ein einziges Umlaufrad verwendet, so ergeben sich dadurch Unwuchten, die bei höheren Drehzahlen zu vermeiden sind. Vorzugsweise wird darum jedes Umlaufrad als Gruppe von n gleichen Umlaufrädern ausgebildet, die auf um 360°/n gegeneinander versetzten Stegwellen oder Exzentern zur Verringerung von Unwuchten angeordnet sind. Je höher die Anzahl von "Teil-Umlaufrädern", die zur Bildung des Umlaufrades vorgesehen sind, desto höher wird die Laufruhe.

Die Getriebebaureihe umfaßt vorzugsweise eine Vielzahl von Umlaufrädern, die im wesentlichen identische Umfangsabmessungen, insbesondere gleiche Zähnezahlen $z_2$ und Durchmesser, jedoch verschiedene Dicken (bzw. Breiten) zur Aufnahme verschieden hoher Drehmomente aufweisen. Alternativ oder auch zusätzlich können die Umlaufräder (bei im wesentlichen identischen Umfangsabmessungen) jeweils aus mehreren, gestapelt angeordneten Umlaufrädern zusammengesetzt sein. Beide Möglichkeiten können auch kummulativ verwendet werden, so daß zur Bildung einer Vielzahl von verschieden dicken (breiten) Umlaufrädern nur wenige, voneinander verschiedene Einzelräder hergestellt bzw. bei Hersteller vorgehalten werden müssen, um eine in Hinblick auf die Belastbarkeit des Umlaufrades beliebige Anzahl von Umlaufrädern steigender Belastbarkeit herstellen zu können.

Vorzugsweise umfaßt die Getriebebaureihe eine Vielzahl von Hohlrädern mit im wesentlichen identischen Innenumfangsabmessungen, insbesondere mit einer gleichen Anzahl von Nuten und gleichem Innendurchmesser aber mit verschiedenen Dicken zur Aufnahme verschieden hoher Drehmomente, wobei wieder - wie bei den Umlaufrädern - die Hohlräder aus mehreren gestapelt angeordneten Hohlrädern zusammensetzbar sind. Die hierbei erzielbaren Vorteile entsprechen den oben im Zusammenhang mit den Umlaufrädern geschilderten Vorteilen.

Vorzugsweise sind die Gehäuse der Getriebebaureihe zum Ein- oder Anbau weiterer Getriebestufen ausgebildet. Diese weiteren Getriebestufen können vor-, zwischen- oder nachgeschaltet sein und beispielsweise Stirnradstufen oder Winkelgetriebestufen umfassen, insbesondere gerad- oder spiroidverzahnte Winkelgetriebestufen.

Bei einer bevorzugten Alternative ist das Gehäuseteil für zwei (Umlaufgetriebe-)Stufen verwendbar. Das Gehäuseteil bildet dabei einen Gehäuseabschnitt im Bereich der Umlaufräder der ersten und zweiten Stufe. Die Zähnezahlen der Kurvenscheibe können in der ersten und der zweiten Stufe jeweils unterschiedlich sein. Zusätzlich können wiederum - wie oben bereits ausgeführt - Außenrollen eingespart werden, also nur jede zweite, dritte oder vierte ... Außenrolle in die Nuten eingesetzt werden. Vorzugsweise wird hierbei ein einziges (aber gegebenenfalls aus mehreren Abschnitten zusammengesetztes) Hohlrad mit gleicher Nutenzahl für mehrere Getriebestufen vorgesehen.

Die zu übertragenden Drehmomente sind in der ersten Stufe unterschiedlich zu denen in der zweiten Stufe. Vorzugsweise wird darum die Breite der Umlaufräder in der ersten Stufe geringer als in der zweiten Stufe ausgeführt. Dementsprechend werden die Gehäuseteile mit den Außenrollen zur Bildung der Hohlräder schmäler bzw. breiter ausgeführt. Dabei ergibt sich unter anderem der wesentliche Vorteil, daß in der ersten und in der zweiten Stufe eingesetzte Kurvenscheiben gleicher Zähnezahl auf der gleichen Maschine und in einem einzigen Bearbeitungsgang fertigbar sind, wobei die Breiten der einzelnen Umlaufräder dabei unterschiedlich sei können. Alternativ kann - wie oben bereits ausgeführt - jedes Umlaufrad aus mehreren schmaleren Umlaufrädern zusammengesetzt sein, wobei sich die genannten weiteren zusätzlichen Vorteile bezüglich Reduzierung der Teilevielfalt ergeben.

Die arithmetische Folge der Differenzen der Zähnezahlen ist vorzugsweise eine Folge erster Ordnung (1, 2, 3 ...). Dadurch ergibt sich eine besonders feine Abstufung der möglichen Übersetzungen. Es sei jedoch an dieser Stelle ausdrücklich darauf hingewiesen, daß in der Praxis nicht jede fertigungstechnisch mögliche Übersetzung gefordert wird, die Anwender vielmehr in bestimmten Bereichen feinere Abstufungen voraussetzen, in anderen (Leistungs-)Bereichen durchaus mit größeren Abstufungen zufrieden sind. Vom Erfindungsgedanken umfaßt sind darum auch solche Getriebebaureihen, bei denen die einzelnen Übersetzungen sich aus der genannten arithmetischen Reihe der Abstufungen ergeben, einzelne Zwischenwerte oder Gruppen von Zwischenwerten jedoch als "theoretisch mögliche Werte" fertigbar sind, in der angebotenen Getriebebaureihe jedoch nicht aufgeführt werden.

Vorzugsweise sind die Nuten derart ausgebildet, daß beim Fortlassen von Außenrollen als verbleibende Außenrollen solche mit vergrößertem Durchmesser einsetzbar sind. Es wird also beim Weglassen von Außenrollen Platz derart frei, daß die verbleibenden Außenrollen größer dimensioniert werden können, was den Wirkungsgrad des Getriebes sowie das maximal übertragbare Drehmoment erhöht, wobei dennoch ein und dieselben Gehäuseteile bzw. Hohlräder mit den darin angebrachten Nuten verwendbar sind.

Bei der Fertigung der Gehäuseabschnitte, in welchen die Nuten angebracht sind, wird vorzugsweise der gleiche Durchmesser von Nuten hergestellt, jedoch werden die Nuten auf verschiedenem Durchmesser derart angeordnet, daß verschiedene Exzentrizitäten realisierbar sind. Mit ein und demselben Werkzeug können also verschiedene Hohlräder hergestellt werden. Durch die identische Nutenbreite wiederum ergibt sich die Verwendbarkeit derselben Außenrollen.

Vorzugsweise umfaßt die Getriebebaureihe eine Vielzahl von Exzenterelementen, die drehfest mit der ersten Welle verbindbar oder auf dieser ausgebildet sind, so daß Umlaufräder mit gleichen Lagerabmessungen auf den Exzenterelementen mit verschiedenen Exzentrizitäten zur ersten Welle gelagert werden können. Die erste Welle bleibt also erhalten, so daß dieses recht aufwendig zu fertigende Bauteil in großen Stückzahlen herstellbar ist.

Vorzugsweise ist die erste Welle in zwei Abschnitte aufgeteilt, die über eine Verbindungseinrichtung miteinander drehfest verbunden sind. Hierbei ist eine aus dem Gehäuse herausführende Motorwelle und ein im Gehäuse gelagerter Umlaufradträger vorgesehen, auf welchem die Exzenterelemente sitzen. Die beiden Wellenabschnitte sind durch die Verbindungseinrichtung miteinander drehfest verbunden, wobei diese Verbindungseinrichtung insbesondere als Einsteckverbindung unter Verwendung von Verzahnung, Rändelung, Kerbverzahnung, Preßsitz (zylindrisch oder konisch) oder auch durch Kleben ausgeführt sein kann, was eine besonders schnelle und einfache Fertigung ermöglicht. Darüber hinaus können zum Ankoppeln verschiedener Motoren bzw. anderer, mit dem Getriebe zu verbindender Vorrichtungen jeweils adäquat dimensionierte Motorwellen mit ansonsten gleichbleibenden Umlaufradträgern verbunden werden. Hierdurch ergibt sich eine weitere Reduktion notwendiger Teile.

Die zweite Welle ist vorzugsweise als Umlaufradträger für eine weitere Umlaufgetriebestufe ausgebildet, wenn ein mehrstufiges Getriebe gefordert wird. Es entfällt somit die bisher übliche Paßfederverbindug zwischen den beiden Getriebestufen.

Wenn das Umlaufgetriebe als Zyklogetriebe ausgebildet ist, so wird vorzugsweise eine Vielzahl von Antriebssystemen in der Getriebebaureihe vorgesehen, die zur Übertragung verschieden hoher Maximaldrehmomente ausgebildet sind. Gleichzeitig sinkt hierbei üblicherweise (bei steigendem Maximaldrehmoment) die Laufruhe. Es kann also je nach Kundenwunsch bzw. Anwendungszweck dasjenige Antriebssystem herausgesucht werden, welches am besten geeignet ist.

Das Antriebssystem umfaßt vorzugsweise Mitnehmerbolzen, die bei einem Parallelzapfengetriebe als Zapfen, bei einem Parallelkurbelgetriebe als Kurbeln und bei einem Antriebssystem nach dem Doppelkreuzprinzip als Abtriebsbolzen ausgebildet sind. Derartige Mitnehmerbolzen sind sehr einfach in großen Stückzahlen zu fertigen. Hierbei ist vorzugsweise in der Getriebebaureihe eine Vielzahl von Mitnehmerbolzen unterschiedlicher Durchmesser und Exzentrizitäten e ihrer Achsen vorgesehen, so daß eine große Vielfalt von Getrieben mit verschiedenen maximalen Drehmomenten bzw. mit verschiedenen Laufruhen herstellbar sind. Insbesondere ist es von Vorteil, wenn die Mitnehmerbolzen in einer durch 4 teilbaren Anzahl vorgesehen sind, was die Laufruhe vergrößert. Bei steigendem Fortlassen von Außenrollen werden vorzugsweise die Mitnehmerbolzen mit verringertem Durchmesser ausgebildet, was die Laufruhe vergrößert. Zusätzlich oder auch alternativ wird eine erhöhte Anzahl n von Umlaufrädern oder Kurvenscheiben vorgesehen, die auf um 360°/n gegeneinander versetzten Exzentern angeordnet sind. Dadurch wird die Laufruhe ebenfalls erhöht. Zusätzlich oder auch alternativ wird eine kleine Differenz $z_2$-$z_1$ der Anzahlen $z_1$, $z_2$ von Zähnen vorgesehen, um die Laufruhe weiterhin zu vergrößern.

Dieser Gedanke ist insofern überraschend, als üblicherweise die Laufruhe eines derartigen Getriebes ausschließlich durch Korrekturen an der Kurvenscheibe nach dem Stand der Technik erreicht wird.

Vorzugsweise ist weiterhin eine Vielzahl von Mitnehmerbolzen und/oder Kurvenscheiben und/oder Außenrollen aus Werkstoffen unterschiedlicher Festigkeiten und/oder mit Oberflächen unterschiedlicher Härte vorgesehen, so daß ansonsten identisch ausgebildete Getriebe durch Einsatz von Werkstoffen / Oberflächen erhöhter Qualität zur Übertragung erhöhter Drehmomente ausgebildet werden können, ohne die gesamte Getriebebaureihe in ihrem Preis zu erhöhen.

Vorzugsweise ist eine Vielzahl von Außenrollen verschiedenen Durchmessers vorgesehen, die zum Beispiel mittels Hülsen angepaßter Innendurchmesser aber gleichen Außendurchmessers in dieselben Nuten einsetzbar sind. Es können also - wie oben angedeutet - trotz einer vereinfachten Herstellung der Nuten mit einem einzigen Werkzeug verschieden große Außenrollen zur Aufnahme verschieden großer Drehmomente (bei verschieden großen Drehmoment-Welligkeiten) verwendet werden, was einen erheblichen Vorteil bei der Fertigung der Getriebebaureihe bringt.

Insgesamt richtet sich also das erfindungsgemäße Verfahren darauf, daß die Fertigung mit einer möglichst geringen Anzahl von (Spezial-)Werkzeugen geschieht. Darüber hinaus wird die Fertigung auch vorzugsweise gleichzeitig an mehreren Teilen gleichzeitig vorgenommen. So zum Beispiel werden mehrere Umlaufräder gestapelt (durch Fräsen, Stoßen, Räumen oder dergleichen Fertigungsschritte) bearbeitet, was erhebliche Vereinfachungen bei der Fertigung mit sich bringt. Gleiches gilt natürlich auch für die Hohlräder.

Nachfolgend werden Ausführungsbeispiele der Erfindung anhand von Abbildungen näher erläutert. Hierbei zeigen:

Fig. 1 — eine schematisierte Darstellung eines zweiwelligen rückkehrenden Umlaufgetriebes;

Fig. 2 — einen Längsschnitt durch eine erste Ausführungsform eines solchen Umlaufgetriebes mit Triebstock- verzahnung;

Fig. 3 — eine Draufsicht auf ein Umlaufrad mit angedeuteten Außenrollen und Mitnehmern;

Fig. 4 — eine zweite Ausführungsform in einer Ansicht ähn- lich der nach Fig. 2;

Fig. 5 — eine Ansicht auf das Umlaufrad in einer Darstellung ähnlich der nach Fig. 3;

Fig. 6 — eine dritte Ausführungsform eines Getriebes in einer Darstellung ähnlich der nach Fig. 2;

Fig. 7 — eine Draufsicht auf ein Umlaufrad in einer Ansicht ähnlich der nach Fig. 3;

| Fig. 8 | eine weitere Ausführungsform eines Umlaufgetriebes in einer Darstellung ähnlich der nach Fig. 2; |
|---|---|
| Fig. 9 | eine Draufsicht auf das Umlaufrad des Getriebes nach Fig. 8 in einer Darstellung ähnlich der nach Fig. 3; |
| Fig. 10 | eine Ausführungsform eines zweistufigen Umlauf- getriebes in einer Darstellung ähnlich der nach Fig. 2; |
| Fig. 11, 12 und 13 | Draufsichten auf Umlaufräder in einer Darstellung ähnlich der nach Fig. 3 mit unterschiedlichen Zähnezahlen bei jeweils gleicher Anzahl der Außen- rolle, gleichem Durchmesser und damit gleichem Hohlrad und |
| Fig. 14, 15 und 16 | Draufsichten auf Umlaufräder in einer Ansicht ähnlich der nach Fig. 3 mit unterschiedlichen Durchmessern der Mitnehmerbolzen und unter- schiedlichen Exzentrizitäten e der Achsen der Mitnehmerbolzen bei jeweils gleicher Anzahl der Außenrollen und gleichen Zähnezahlen. |

In der nachfolgenden Beschreibung werden für gleiche und gleichwirkende Teile dieselben Bezugsziffern verwendet.

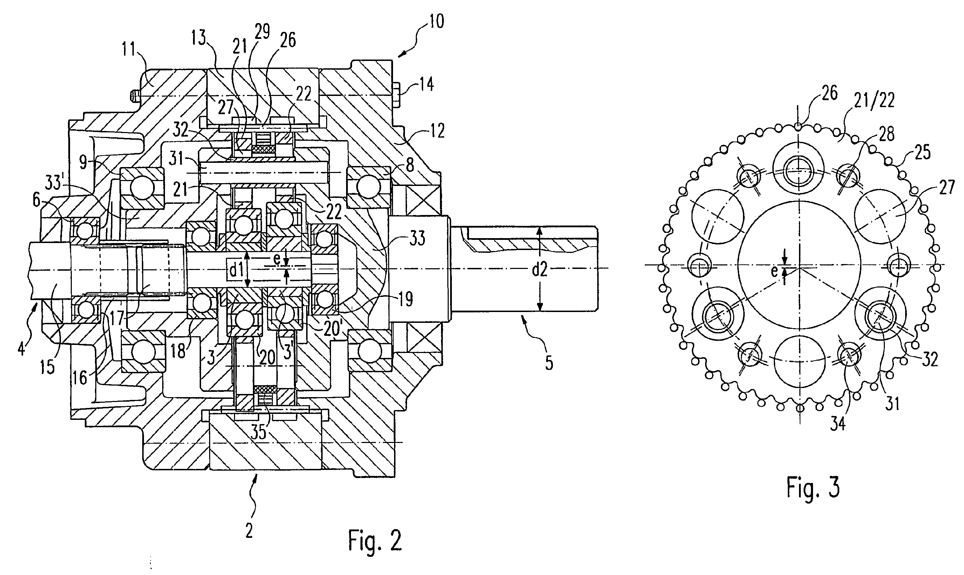

Wie in den Figuren 2 und 3 dargestellt umfaßt ein Getriebe der erfindungsgemäßen Getriebebaureihe ein Gehäuse 10, das aus einem ersten Gehäusedeckel 11 und einem zweiten Gehäusedeckel 12 unter Zwischenlage eines Hohlradmantels 13 mittels Schraubbolzen 14 zusammengebaut ist. Eine erste Welle 4 umfaßt eine, aus dem Gehäuse 10 herausragende Motorwelle 15, welche in einem ersten Außenlager 6 gelagert und nach außen in der üblichen Weise abgedichtet ist. Die Motorwelle 15 ist über eine Verbindungseinrichtung 16, die insbesondere als Einsteckverbindung ausgebildet ist, mit einem als Welle ausgebildeten Umlaufradträger 17 drehfest verbunden. Diese Verbindungseinrichtung ist als Verzahnung, Rändelung, Kerbverbindung, also als leicht herstellbare und lösbare Verbindung oder aber als (zylindrischer oder konischer) Preßsitz oder Klebverbindung ausgeführt. Auch diese Verbindungsarten sind sehr leicht herstellbar.

Der Umlaufradträger 17 ist über ein erstes Trägerlager 18 und ein endseitiges zweites Trägerlager 19 in einem äußeren Mitnehmerteil 33 bzw. in einem inneren Mitnehmerteil 33' gelagert. Das Festsetzen der ersten Welle 4 in axialer Richtung geschieht dadurch, daß das erste Außenlager 6 an einer außenseitigen Schulter der Motorwelle 15 und einer innenseitigen Schulter des ersten Gehäusedeckels 11 anliegt. Das erste Trägerlager 18 liegt an seiner, der Motorwelle 15 zugewandten Seite an einer Schulter des Umlaufradträgers 17 sowie (außenseitig) an einer Schulter des inneren Mitnehmerteils 33' an. Das zweite Trägerlager 19 liegt an seiner, der Motorwelle 15 zugewandten Seite an einer Schulter des Umlaufradträgers 17 und an der gegenüberliegenden Seite am äußeren Mitnehmerteil 33 an. Somit ist der Umlaufradträger 17 in axialer Richtung fest mit dem Mitnehmerteil 33, 33' verbunden.

Auf dem Umlaufradträger 17 sitzen zwei durch eine Distanzscheibe voneinander in Abstand gehaltene Exzenterelemente 3, 3', die über weitere Distanzscheiben am ersten Trägerlager 18 bzw. zweiten Trägerlager 19 in axialer Richtung fixiert sind.

Auf den Exzenterelementen 3 sitzen Umlaufradlager 20 bzw. 20', auf denen ein erstes Umlaufrad 21 bzw. ein zweites Umlaufrad 22 drehbar angeordnet sind. Die Exzenterelemente 3 weisen hierbei eine Exzentrizität e gegenüber der Achse der ersten Welle 4 auf, so daß sie sich bei einer Drehung der ersten Welle 4 in einer exzentrischen Umlaufbewegung um diese bewegen.

Die Umlaufräder 21, 22 weisen gemäß Fig. 3 an ihrem Außenumfang Zähne 25 auf, welche mit Außenrollen 26 kämmen, die in Nuten 29 drehbar gelagert sind, welche teils im Hohlradmantel 13, teils in den Gehäusedeckeln 11, 12 angebracht sind. Aus der Dimensionierung gemäß Fig. 2 ist herbei bereits ersichtlich, daß auch solche Außenrollen einbaubar sind, die einen größeren Durchmesser haben, als die in Fig. 2 gezeigten, soweit dies den Bereich betrifft, in welchem die Umlaufräder auf den Außenrollen 26 laufen.

Die Umlaufräder 26, deren Zähne bei diesem Ausführungsbeispiel durch eine Epi-, Hypo- oder Perizykloidenkurve gebildet sind, weisen einerseits Mitnehmerbohrungen 28 und andererseits, zu diesen alternierend, Durchgangsbohrungen 27 auf. Die Durchgangsbohrungen 27 sind derart großzügig dimensioniert, daß Zapfen 31 mit darauf sitzenden Distanzhülsen 32 berührungsfrei hindurchgehen. Die Zapfen 31 sind an ihren Enden mit dem äußeren Mitnehmerteil 33 bzw. dem inneren Mitnehmerteil 33' fest verbunden während die Distanzhülsen 32 zwischen den Mitnehmerteilen 33, 33' sitzen. Auf diese Weise sind die Mitnehmerteile 33, 33' miteinander verbunden.

In den Mitnehmerbohrungen 28 sitzen Mitnehmerbolzen 34 (siehe Fig. 3), die ebenfalls an ihren Enden mit dem äußeren Mitnehmerteil 33 und dem inneren Mitnehmerteil 33' fest verbunden sind. Die Achsen der Mitnehmerbolzen 34 sind zu den Mittelachsen der Mitnehmerbohrungen 28 um den Betrag e der Exzentrizität der Exzenterelemente 3 versetzt. Die Durchmesser der Mitnehmerbohrungen 28 sind um 2 x e größer als die (Außen-) Durchmesser der Mitnehmerbolzen 34, so daß bei einer Umlaufbewegung der Umlaufräder 21, 22 die Mitnehmerbolzen 34 auf den Innenwänden der Mitnehmerbohrungen 28 abrollen, so daß die Drehung der Umlaufräder 21, 22 auf eine zweite Welle 5 übertragen wird, welche drehfest, vorzugsweise einstückig mit dem äußeren Mitnehmerteil 33 verbunden ist. Die Mitnehmerteile 33, 33' und Mitnehmerbolzen 34 bilden zusammen mit den Mitnehmerbohrungen 28 somit ein Abtriebssystem 30.

Zur Erhöhung der Stabilität der Anordnung ist zwischen den Umlaufrädern 21, 22 in der Nähe deren Außenumfänge konzentrisch zur Achse der ersten Welle 4 eine Distanzscheibe 35 eingesetzt, so daß die beiden Umlaufräder 21, 22 eine kompakte, rotierende Einheit bilden.

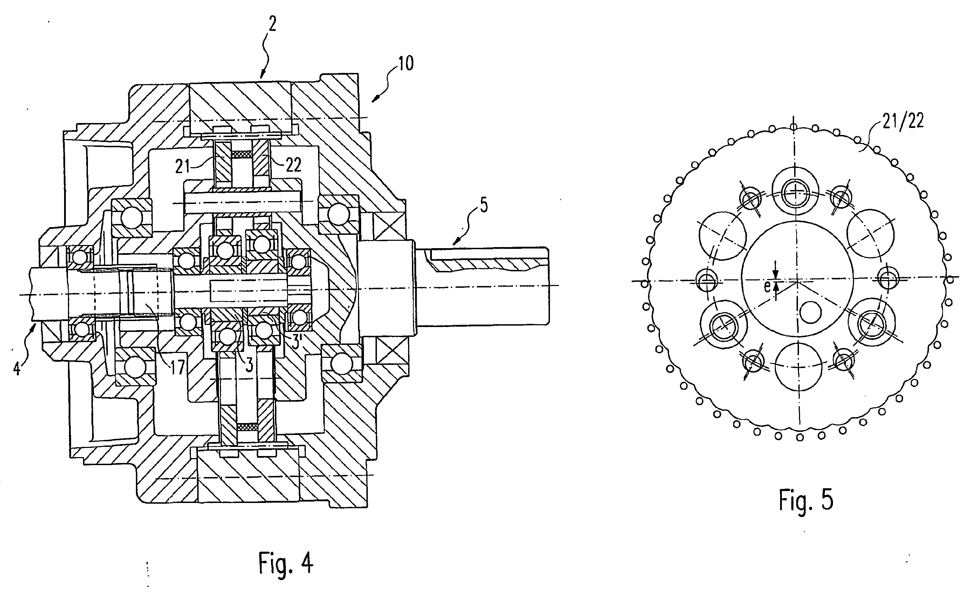

Die in den Fig. 4 und 5 gezeigte Ausführungsform unterscheidet sich von der nach den Fig. 2 und 3 durch ein in seinem Durchmesser vergrößertes Gehäuse 10, in welchem ein gegenüber der Ausführungsform nach den Fig. 2 und 3 größeres Hohlrad 2 angeordnet ist. Dieses Getriebe stellt somit eine größere Baugröße dar als die in den Fig. 2 und 3 gezeigte Ausführungsform. Die Exzentrizität e ist dieselbe wie bei der Ausführungsform nach den Fig. 2 und 3, so daß demzufolge der Durchmesser der Umlaufräder 21, 22 in Anpassung auf das größere Hohlrad 22 ebenfalls vergrößert ist. Es können bei dieser Ausführungsform somit derselbe Umlaufradträger 17 mit denselben Exzenterelementen 3, 3' Verwendung finden wie bei der Ausführungsform nach den Fig. 2 und 3. Die Wellen 4 und 5 werden entsprechend dem höheren Maximaldrehmoment, das von diesem Getriebe übertragbar ist, größer dimensioniert werden, was aber zunächst keine konstruktionstechnische Notwendigkeit ist sondern von den Bedürfnissen der anzubauenden Teile (Motor, angetriebene Maschine) abhängt.

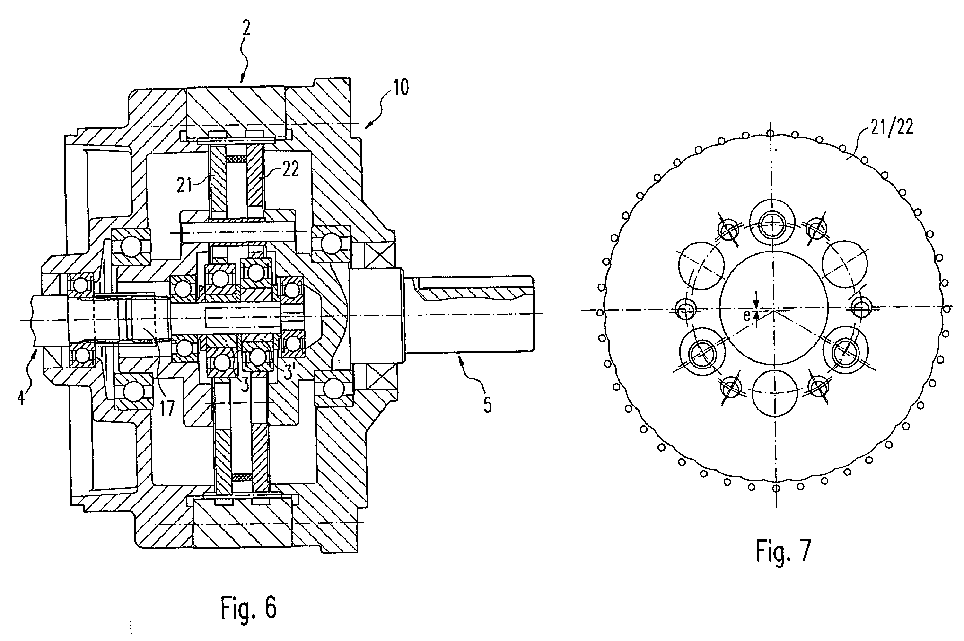

Die nächste Baugröße ist in den Fig. 6 und 7 gezeigt. Gegenüber den vorigen Ausführungsformen sind wieder das Gehäuse 10 mit dem Hohlrad 2 und die Umlaufräder 21, 22 größer dimensioniert. Die Exzentrizität e ist wieder dieselbe, so daß sich dieselben Effekte wie zuvor beschrieben ergeben.

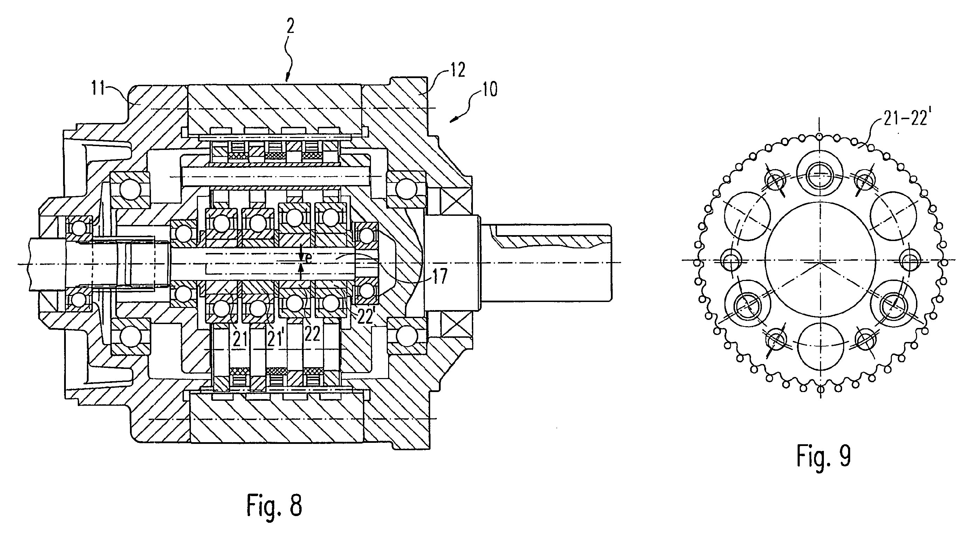

Bei der in den Fig. 8 und 9 gezeigten Variante sind das Hohlrad 2 und der Umlaufradträger 17 derart gegenüber den zuvor gezeigten Ausführungsformen verlängert, daß insgesamt vier Umlaufräder 21, 21'; 22, 22' Platz finden. Diese Umlaufräder sind bei der gezeigten Ausführungsform in zwei Paaren angeordnet, die um 180° zur Unwuchtreduzierung versetzt angeordnet sind. Selbstverständlich ist es möglich, einen Versatz um jeweils 90° vorzusehen, so daß nicht nur eine Dipol- sondern eine Quadrupol-Kompensation des Trägheitsmoments bzw. der Unwucht möglich wird. Aus diesem Ausführungsbeispiel ist ersichtlich, daß Variationen der Länge (in axialer Richtung) des Hohlrades 2 und des Umlaufradträgers 17 sowie der Mitnehmerbolzen 34 mit den Distanzhülsen 32 zur Verwendung von mehr oder weniger Umlaufrädern 21, 22 möglich ist, ohne daß dadurch konstruktionsnotwendigerweise die übrigen Teile ebenfalls verändert werden müßten.

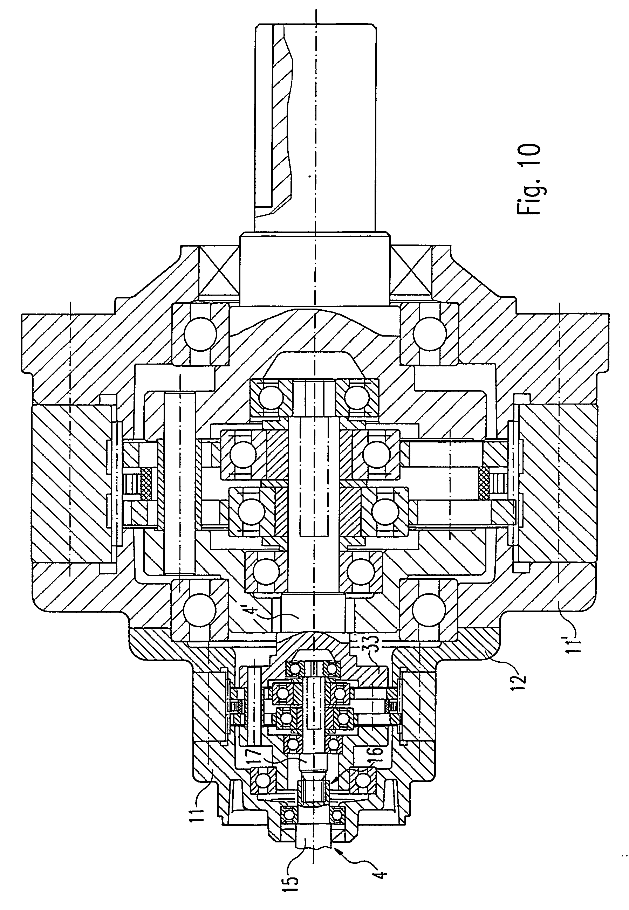

Bei der in Fig. 10 gezeigten Ausführungsform handelt es sich um ein zweistufiges Zyklogetriebe, bei welchem die Verbindungseinrichtung 16 zur Verbindung der Motorwelle 15 mit dem Umlaufradträger 17 der ersten Getriebestufe als Einsteckverbindung ausgebildet ist. Diese erste Getriebestufe kann nun in ihren Bauelementen bis auf den zweiten Gehäusedeckel 12 und die zweite Welle 5 mit dem daran befindlichen äußeren Mitnehmerteil 33 aus einer ersten Baugröße stammen, die zweite Getriebestufe (in Fig. 10 die rechte Getriebestufe) kann aus einer größeren Baugröße stammen, bei welcher lediglich die erste Welle 4' und der erste Gehäusedeckel 11' gegenüber einem einstufigen Getriebe dieser Baugröße abgeändert sind.

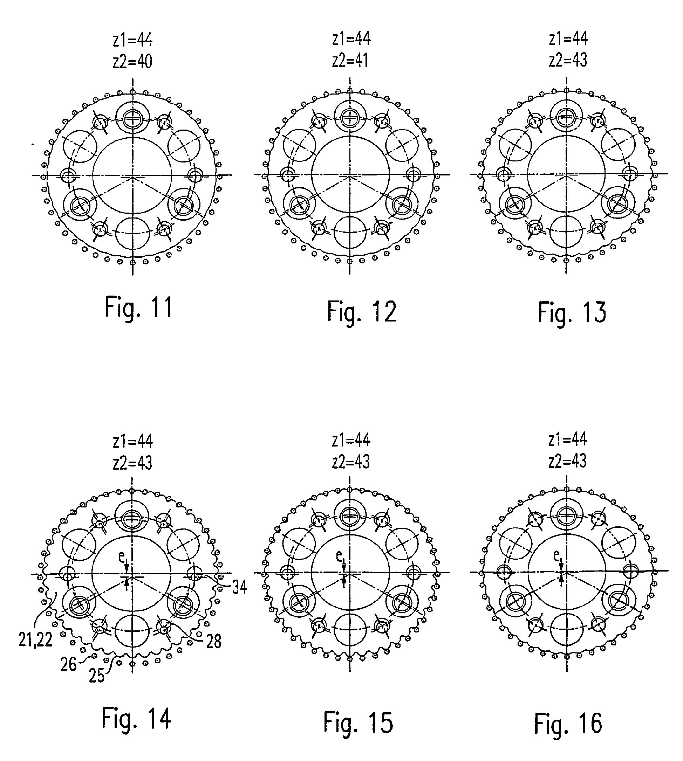

Bei den Ausführungsformen der Umlaufräder gemäß den Fig. 11, 12 und 13 sind Zykloscheiben mit unterschiedlichen Zähnezahlen gezeigt, die jeweils im selben Hohlrad mit derselben Anzahl von Außenrollen laufen. Dadurch ergeben sich bei ansonsten identischen Bauteilen verschiedene Übersetzungen.

Bei den in den Fig. 14, 15 und 16 gezeigten Ausführungsformen von Umlaufrädern, die in Hohlrädern laufen, sind die Hohlräder mit den Außenrollen und die Anzahlen der Zähne der Umlaufräder gleich. Die Durchmesser der Mitnehmerbolzen 34 steigen bei gleichbleibenden Durchmessern der Mitnehmerbohrungen 28 und sinkender Exzentrizität e (der nicht gezeigten Exzenterelemente 3) von Fig. 14 zu Fig. 16, wodurch das maximal übertragbare Drehmoment abnimmt, die Laufruhe jedoch zunimmt bzw. die Drehmomentwelligkeiten abnehmen.

Aus der bisherigen Beschreibung ergibt sich bereits, daß die hier gezeigte Getriebebaureihe eine Vielzahl von Einzelbauteilen aufweist, die innerhalb einer Baugröße zur Bildung verschiedener Varianten aber auch zwischen verschiedenen Baugrößen beibehalten bleiben können, um bestimmte Parameter "einstellen" zu können, zu denen insbesondere natürlich die Übersetzung und das übertragbare Drehmoment, aber auch Laufeigenschaften (Laufunruhe) zählen.

Ein Beispiel einer Getriebebaureihe wird anhand der nachfolgenden Tabelle erläutert, die eine Reihe von Übersetzungszahlen zeigt, die mit einem Gehäuseteil mit N = 72 Nuten realisierbar ist. Dabei werden entweder alle Nuten mit Außenrollen besetzt (Teilsequenz S Index 1 mit $z_1 = 24$) oder nur jede zweite (Teilsequenz S Index 2 mit $z_2 = 36$) oder nur jede dritte (Teilsequenz S Index 3 mit $z_1 = 72$). Auch hier wird wieder darauf hingewiesen, dass in denjenigen Getrieben, in welchen nicht alle Nuten mit Außenrollen besetzt sind, auch die Nuten bei der Fertigung entweder vollständig fortgelassen oder nur bis zu einem niedrigeren Fertigungsgrad (z. B. im Guss) ausgeführt sein können.

| is2 | -3 | | -5 | | -7 | | -8 | | -11 | | -17 | | -23 | |
|---|---|---|---|---|---|---|---|---|---|---|---|---|---|---|
| | Z2 | Z1 | Z2 | Z1 | Z2 | Z1 | Z2 | Z1 | Z2 | Z1 | Z2 | Z1 | Z2 | Z1 |
| $S_1$ | 18 | 24 | 20 | 24 | 21 | 24 | | | 22 | 24 | | | 23 | 24 |
| $S_2$ | 27 | 36 | 30 | 36 | | | 32 | 36 | 33 | 36 | 34 | 36 | " | |
| $S_3$ | 54 | 72 | 60 | 72 | 63 | 72 | 64 | 72 | 66 | 72 | 68 | 72 | 69 | 72 |
| | | | | | | | | | | | | | | |

| is2 | -35 | | -71 | |
|---|---|---|---|---|
| | Z2 | Z1 | Z2 | Z1 |
| $S_1$ | | | | |
| $S_2$ | 35 | 36 | | |
| $S_3$ | 70 | 72 | 71 | 72 |
| | | | | |

In der gesamten, zur Verwendung vorgesehenen Baureihe wird dann je nach Optimierung bezüglich einer oder mehrerer physikalischer Größen, wie Laufruhe, Geräusche oder Schwingungen, maximal übertragbares Drehmoment oder dergleichen die am besten geeignete Realisierung gewählt.

In der nachfolgenden Tabelle B wird als Beispiel die Optimierung bezüglich des maximal übertragbaren Drehmomentes ausgeführt, die sich durch Auswahl der geringsten Zähnezahldifferenzen ergibt:

| is2 | -3 | | -5 | | -7 | | -8 | | -11 | | -17 | | -23 | |
|---|---|---|---|---|---|---|---|---|---|---|---|---|---|---|
| | Z2 | Z1 | Z2 | Z1 | Z2 | Z1 | Z2 | Z1 | Z2 | Z1 | Z2 | Z1 | Z2 | Z1 |
| | 18 | 24 | 20 | 24 | 21 | 24 | 32 | 36 | 22 | 24 | 34 | 36 | 23 | 24 |
| | | | | | | | | | | | | | | |

| is2 | -35 | | -71 | |
|---|---|---|---|---|
| | Z2 | Z1 | Z2 | Z1 |
| | 35 | 36 | 71 | 72 |

Bezugszeichenliste

2 Hohlrad

3 Exzenterelement

4 erste Welle

5 zweite Welle

6 erstes Außenlager

8 zweites Außenlager

9 zweites Innenlager

10 Gehäuse

11 erster Gehäusedeckel

12 zweiter Gehäusedeckel

13    Hohlradmantel

14    Schraubbolzen

15    Motorwelle

16    Verbindungseinrichtung

17    Umlaufradträger

18    erstes Trägerlager

19    zweites Trägerlager

20    Umlaufradlager

21    Umlaufrad

22    Umlaufrad

25    Umlaufradzahn

26    Außenrolle

27    Durchgangsbohrung

28    Mitnehmerbohrung

29    Nut

30    Abtriebssystem

31    Zapfen

32    Distanzhülse

33    äußeres Mitnehmerteil

33'   inneres Mitnehmerteil

34    Mitnehmerbolzen

35    Distanzscheibe

**Patentansprüche**

1.  Getriebebaureihe bestehend aus einer Vielzahl von Getrieben, die jeweils mindestens eine Getriebestufe nach Art von zweiwelligen rückkehrenden Umlaufgetrieben, umfassend eine Kombination eines offenen Plusgetriebes mit Triebstockverzahnung und ein Abtriebssystem aufweisen, umfassend
    mehrere Baugrößen, die jeweils Gehäuse (10) mit darin angeordneten Hohlrädern (2), gebildet aus einer Anzahl $z_0$ von Nuten (29) und eine erste Anzahl $z_1$ von darin gelagerten Außenrollen (26) aufweisen,
    mehrere Varianten der Baugrößen zur Bildung verschiedener Übersetzungsverhältnisse oder zur Übertragung verschieden großer Maximaldrehmomente zwischen einer ersten Welle (4) und einer zu dieser zentrischen zweiten Welle (5) und/oder zur Sicherstellung verschiedener
    Laufruheeigenschaften, mit Umlaufrädern (21, 22), insbesondere Kurvenscheiben, die jeweils eine zweite Anzahl $z_2$ von Zähnen (25) aufweisen und über das Abtriebssystem (30) mit der zweiten Welle (5) drehfest verbunden sind, wobei die Anzahl $z_0$ der Nuten (29) ein Produkt aus mehr als zwei Primfaktoren ist und die mehreren Varianten jeweils Hohlrädern (2) umfassen, bei denen in den Nuten unter regelmäßigem Fortlassen von einzelnen Außenrollen (26) in jeweils voneinander verschiedenen equidistanten Abständen Außenrollen (26) gelagert sind, und wobei auch die Nuten, bei denen die Außenrollen fortgelassen sind, mindestens bis zu einem niedrigeren Fertigungsgrad, z.B. im Guß, ausgeführt sind.

**2.** Getriebebaureihe nach Anspruch 1,
**dadurch gekennzeichnet, dass** innerhalb einer Baugröße

- mindestens zwei Varianten verschiedene Zähnezahlen z2 aufweisen,
- mindestens zwei Varianten verschiedene Anzahlen z1 von Triebstöcken (26) aufweisen, wobei bei diesen Varianten die Anzahl z1 von Triebstöcken (26) der Anzahl N der Nuten gleicht oder einem kombinatorisch möglichen Teilprodukt dieser Primfaktoren gleicht.

**3.** Getriebebaureihe nach einem der vorhergehenden Ansprüche,
**dadurch gekennzeichnet, dass** N / p der Anzahl z1 der Außenrollen (26) gleicht, so dass nur diejenigen Nuten im Gehäuseteil (21, 22) ausgeformt und bearbeitet sind, in denen Außenrollen (26) vorgesehen sind.

**4.** Getriebebaureihe nach einem der vorhergehenden Ansprüche,
**dadurch gekennzeichnet, dass** die zweiwellige rückkehrende Umlaufgetriebestufe eintriebsseitig eine sich drehende Stegwelle umfasst.

**5.** Getriebebaureihe nach einem der vorhergehenden Ansprüche,
**dadurch gekennzeichnet, dass** die zweiwellige rückkehrende Umlaufgetriebestufe als Excentergetriebestufe ausgebildet ist.

**6.** Getriebebaureihe nach einem der vorhergehenden Ansprüche,
**dadurch gekennzeichnet, dass** die zweiwellige rückkehrende Umlaufgetriebestufe als Zyklogetriebestufe ausgebildet ist, wobei mit der Stegwelle ein Excenter verbunden ist, der mindestens eine Kurvenscheibe antreibt und dass die Triebstockverzahnung als Triebstöcke eine Anzahl z1 von kreisförmig angeordneten Außenrollen vorgesehen sind, die mit einer Anzahl z2 von Zähnen der mindestens einen Kurvenscheibe zusammenwirken und deren Drehbewegung auf die Abtriebswelle übertragen und in einem Gehäuseteil mit einer Anzahl von Nuten gelagert sind.

**7.** Getriebebaureihe nach einem der vorhergehenden Ansprüche,
**dadurch gekennzeichnet, dass** innerhalb einer Baugröße bei mindestens zwei Varianten dasselbe Gehäuseteil mit Nuten zum Lagern der Außenrollen vorgesehen ist.

**8.** Getriebebaureihe nach einem der vorhergehenden Ansprüche,
**dadurch gekennzeichnet, dass** dieselben Außenrollen von den beiden Getriebestufen verwendet werden.

**9.** Getriebebaureihe nach einem der vorhergehenden Ansprüche,
**dadurch gekennzeichnet, dass** bei mindestens einer Variante die Abtriebswelle gleichzeitig als Zykloscheibenträger einer weiteren Zyklogetriebestufe ausgeführt ist zur spielfreien Verbindung der beiden Zyklogetriebestufen.

**10.** Getriebebaureihe, nach einem der vorhergehenden Ansprüche,
**dadurch gekennzeichnet, dass** die Varianten einer Teilsequenz mit abnehmender Anzahl z1 eine zunehmende Exzentrizität der Zyklogetriebstufe aufweisen.

**11.** Getriebebaureihe, nach einem der vorhergehenden Ansprüche,
**dadurch gekennzeichnet, dass** die Varianten einer Teilsequenz mit abnehmender Anzahl z1 abnehmende Durchmesser der Mitnehmerbolzen aufweisen.

**12.** Getriebebaureihe, nach einem der vorhergehenden Ansprüche,
**dadurch gekennzeichnet, dass** die Varianten einer Teilsequenz mit abnehmender Anzahl z1 eine nicht-abnehmende Anzahl von Kurvenscheiben aufweisen.

**13.** Getriebebaureihe, nach einem der vorhergehenden Ansprüche,
**dadurch gekennzeichnet, dass** die gesamte, zur Verwendung vorgesehene Baureihe bei gleicher Umlaufübersetzung nur Varianten mit betragsmäßig möglichst kleiner Differenz |z1 - z2| umfasst.

14. Getriebebaureihe, nach einem der vorhergehenden Ansprüche,
**dadurch gekennzeichnet, dass** bei der Verwendung von Spezialhülsen bei ersten Zähnezahlen z1 ein Holrad mit Nuten zur Aufnahme von ersten dicken Außenrollen mit Durchmesser d eingesetzt wird und bei weiteren Zähnezahlen z1, die größer sind als die ersten Zähnezahlen z1, dünnere Außenrollen als die ersten dicken Außenrollen verwendet werden, wobei die dünneren Außenrollen in entsprechend dicke Hülsen mit Durchmesser d gelagert sind, so dass die dicken Hülsen passgenau in die aufnehmenden Nuten, insbesondere Bohrungen, des Hohlrades eingefügt sind.

15. Getriebebaureihe nach einem der vorhergehenden Ansprüche,
**dadurch gekennzeichnet, dass** das Abtriebssystem (30) ausgebildet ist als entweder ein Parallelzapfengetriebe mit einer Übersetzung von m = 1
oder
ein Parallelkurbelgetriebe, das einem Parallelzapfengetriebe kinematisch gleichwertig ist,
oder
ein Antriebssystem nach dem Doppelkreuzprinzip.

16. Getriebebaureihe nach einem der vorhergehenden Ansprüche,
**dadurch gekennzeichnet, dass** die Getriebestufe nach Art eines Umlaufgetriebes ein Zyklogetriebe umfasst und das Umlaufrad als Kurvenscheibe (21, 22) ausgebildet ist.

17. Getriebebaureihe nach einem der vorhergehenden Ansprüche,
**dadurch gekennzeichnet, dass** das Umlaufrad (21, 22) als Gruppe von n gleichen Umlaufrädern ausgebildet ist, die auf um 360°/n gegeneinander versetzten Stegwellen oder Exzentern (3, 3') zur Verringerung von Unwuchten angeordnet sind.

18. Getriebebaureihe nach einem der vorhergehenden Ansprüche,
**dadurch gekennzeichnet, dass** die Getriebebaureihe eine Vielzahl von Umlaufrädern (21, 22) umfasst, die im wesentlichen identische Umfangsabmessungen, insbesondere gleiche Anzahlen $z_2$ von zweiten Zähnen (25) und Durchmesser aber verschiedene Dicken zur Aufnahme verschieden hoher Drehmomente aufweisen, und/oder dass die Umlaufräder (21, 22) aus mehreren gestapelt angeordneten Umlaufrädern (21, 22) zusammengesetzt sind.

19. Getriebebaureihe nach einem der vorhergehenden Ansprüche,
**dadurch gekennzeichnet, dass** die Getriebebaureihe eine Vielzahl von Hohlrädern (2) mit im wesentlichen identischen Innenumfangsabmessungen, insbesondere gleicher Anzahl von Nuten (29) und Innendurchmesser aber verschiedene Dicken zur Aufnahme verschieden hoher Drehmomente aufweisen, oder dass die Hohlräder (2) aus mehreren gestapelt angeordneten Hohlrädern zusammengesetzt sind.

20. Getriebebaureihe nach einem der vorhergehenden Ansprüche,
**dadurch gekennzeichnet, dass** die Gehäuse (2) zum Ein- oder Anbau weiterer Getriebestufen, insbesondere vor-, zwischen- oder nachgeordneten Getriebestufen, ausgebildet sind, die insbesondere Winkelgetriebe-, Planetengetriebe-, Stirnradgetriebe- oder spiroid-verzahnte Getriebestufen umfassen.

21. Getriebebaureihe nach einem der vorhergehenden Ansprüche,
**dadurch gekennzeichnet, dass** mehrere Getriebestufen in einem Gehäuseteil mit einem Hohlrad (2) mit gleicher Nutenzahl für mindestens zwei Getriebestufen vorgesehen sind.

22. Getriebebaureihe nach einem der vorhergehenden Ansprüche,
**dadurch gekennzeichnet, dass** die arithmetische Folge m-ter Ordnung, z.B. (1, 2, 3 ...) ist.

23. Getriebebaureihe nach einem der vorhergehenden Ansprüche,
**dadurch gekennzeichnet, dass** die Nuten (29) derart ausgebildet sind, dass beim Fortlassen von Außenrollen (26) als verbleibende Außenrolle (26) solche mit vergrößertem Durchmesser einsetzbar sind.

24. Getriebebaureihe nach einem der vorhergehenden Ansprüche,
**dadurch gekennzeichnet, dass** eine Vielzahl von Exzenterelementen (3, 3') vorgesehen ist, die drehfest mit der ersten Welle (4) verbindbar oder auf dieser ausgebildet sind, so dass Umlaufräder (21, 22) mit gleichen Lagerabmessungen mit verschiedenen Exzentrizitäten zur ersten Welle (4) lagerbar sind.

**25.** Getriebebaureihe nach einem der vorhergehenden Ansprüche,
**dadurch gekennzeichnet, dass** die erste Welle (4) eine drehfeste Verbindungseinrichtung (16) zwischen einer aus dem Gehäuse (10) herausgeführten Motorwelle (15) und einem im Gehäuse (10) gelagerten Umlaufradträger (17) umfasst.

**26.** Getriebebaureihe nach einem der vorhergehenden Ansprüche,
**dadurch gekennzeichnet, dass** die zweite Welle (5) als Umlaufradträger für eine weitere Umlaufgetriebestufe ausgebildet ist.

**27.** Getriebebaureihe nach einem der vorhergehenden Ansprüche,
**dadurch gekennzeichnet, dass** das Umlaufgetriebe als Zyklogetriebe ausgebildet ist, und dass eine Vielzahl von Abtriebssystemen (30) vorgesehen ist, die zur Übertragung verschiedener Maximaldrehmomente mit bei steigendem Maximaldrehmoment sinkender Laufruhe ausgebildet sind.

**28.** Getriebebaureihe nach einem der vorhergehenden Ansprüche,
**dadurch gekennzeichnet, dass** das Antriebssystem Mitnehmerbolzen (34) umfasst, die bei einem Parallelzapfengetriebe als Zapfen, bei einem Parallelkurbelgetriebe als Kurbeln und bei einem Antriebssystem nach dem Doppelkreuzprinzip als Abtriebsbolzen ausgebildet sind.

**29.** Getriebebaureihe nach Anspruch 28,
**dadurch gekennzeichnet, dass** eine Vielzahl von Mitnehmerbolzen (34) unterschiedlicher Durchmesser und Exzentrizitäten e ihrer Achsen vorgesehen ist.

**30.** Getriebebaureihe nach einem der vorhergehenden Ansprüche, insbesondere einem der nach Ansprüche 28 oder 29,
**dadurch gekennzeichnet, dass** die Mitnehmerbolzen (34) in einer durch vier teilbaren Anzahl vorgesehen sind.

**31.** Getriebebaureihe nach einem der vorhergehenden Ansprüche, insbesondere nach einem der Ansprüche 28 bis 30,
**dadurch gekennzeichnet, dass** bei steigendem Fortlassen von Außenrollen (25) die Mitnehmerbolzen (34) mit verringertem Durchmesser ausgebildet sind oder eine erhöhte Anzahl n von Kurvenscheiben (21, 22) vorgesehen ist, die auf um 360°/n gegeneinander versetzten Exzentern (3, 3') angeordnet sind, oder dass eine kleine Differenz $z_2$-$z_1$ der anzahlen $z_1$, $z_2$ von Zähnen (25, 26) im Hohlrad (2) bzw. auf den Umlaufrädern (21, 22) vorgesehen ist.

**32.** Getriebebaureihe nach einem der vorhergehenden Ansprüche, insbesondere nach einem der Ansprüche 28 bis 31,
**dadurch gekennzeichnet, dass** eine Vielzahl von Mitnehmerbolzen (34) oder Kurvenscheiben (21, 22) oder Außenrollen (26) aus Werkstoffen verschiedener Festigkeit und/oder mit Oberflächen unterschiedlicher Härte vorgesehen ist.

**33.** Getriebebaureihe nach einem der vorhergehenden Ansprüche,
**dadurch gekennzeichnet, dass** eine Vielzahl von Außenrollen (26) verschiedenen Durchmessers in dem Bereich vorgesehen ist, in welchem sie mit den Zähnen (25) der Umlaufräder (21, 22) kämmen und die in dieselben Nuten (29) einsetzbar sind.

**34.** Getriebebaureihe nach einem der vorhergehenden Ansprüche,
**dadurch gekennzeichnet, dass** die Gehäuse (10) erste Gehäusedeckel (11), zweite Gehäusedeckel (12) und zwischen diesen gehaltene Hohlräder (2) umfassen.

**35.** Getriebebaureihe nach Anspruch 34,
**dadurch gekennzeichnet, dass** eine Vielzahl von ersten Gehäusedeckeln (11) zum Einbau verschiedener erster Wellen (4) vorgesehen ist.

**36.** Getriebebaureihe nach einem der Ansprüche 34 oder 35,
**dadurch gekennzeichnet, dass** eine Vielzahl von ersten Gehäusedeckeln (11) zum Anbau weiterer Getriebestufen vorgesehen ist.

**37.** Getriebebaureihe nach einem der Ansprüche 34 bis 36,
**dadurch gekennzeichnet, dass** eine Vielzahl von zweiten Gehäusedeckeln (12) zum Einbau verschiedener zweiter Wellen (5) vorgesehen ist.

**38.** Getriebebaureihe nach einem der Ansprüche 34 bis 37,
**dadurch gekennzeichnet, dass** eine Vielzahl von zweiten Gehäusedeckeln (12) zum Anbau verschiedener weiterer Getriebestufen vorgesehen ist.

**39.** Getriebebaureihe nach einem der Ansprüche 34 bis 38,
**dadurch gekennzeichnet, dass** eine Vielzahl von ersten Gehäusedeckeln (11) und zweiten Gehäusedeckeln (12) zum Einbau derselben ersten Wellen (4) bzw. zweiten Wellen (5)und zum Halten verschiedener Hohlräder (2) vorgesehen ist.

**40.** Getriebebaureihe nach einem der vorhergehenden Ansprüche,
**dadurch gekennzeichnet, dass** die Nuten bei den verschiedenen Varianten auf einem verschieden großen Kreis zur Erzeugung verschieden großer Exzentrizität und zur Verbesserung der Laufruhe sitzen.

**41.** Verfahren zum Herstellen einer Getriebebaureihe nach einem der vorhergehenden Ansprüche wobei eine Vielzahl von Hohlrädern verschiedener Innendurchmesser mit gleich großen Nuten oder eine Vielzahl von Umlaufrädern verschiedenen Durchmessers mit gleichen Zahnformen mittels desselben Werkzeugs gefertigt wird.

**42.** Verfahren nach Anspruch 41,
**dadurch gekennzeichnet, dass** beim Fertigen von Hohlrädern oder Umlaufrädern mehrere Hohlräder in gestapelter Weise bzw. mehrere Umlaufräder in gestapelter Weise gleichzeitig, in einem einzigen Arbeitsgang gefertigt werden.

**43.** Verfahren nach Anspruch 42,
**dadurch gekennzeichnet, dass** die gleichzeitig gefertigten Hohlräder oder Umlaufräder verschiedene Dickenabmessungen aufweisen.

**Claims**

**1.** Gearing series consisting of a multiplicity of gearings, each having at least one gearing stage of the two-shaft, reverted planetary gearing type, comprising a combination of an open plus gearing with pin-wheel gear and an output system, comprising
a plurality of sizes, each having housings (10) with internal gears (2) arranged therein, formed from a number $z_0$ of grooves (29), and a first number $z_1$ of external rollers (26) mounted therein,
a plurality of variants of the sizes in order to produce different transmission ratios or to transmit different maximum torques between a first shaft (4) and a second shaft (5) concentric therewith and/or to ensure different quiet-running properties, with planetary gears (21, 22), in particular cam plates, each having a second number $z_2$ of teeth (25) and being connected in a rotationally fixed manner by way of the output system (30) to the second shaft (5), where the number $z_0$ of grooves (29) is a product of more than two prime factors and the plurality of variants each comprise internal gears (2) in which external rollers (26) are mounted in the grooves at equidistant intervals differing from one another in each case, by regular omission of individual external rollers (26), and where also the grooves in which the external rollers are omitted are produced at least to a lower degree of finishing, e.g. during casting.

**2.** Gearing series according to Claim 1,
**characterised in that**
within one size

- at least two variants have different teeth numbers z2,
- at least two variants have different numbers z1 of drive pins (26), in these variants the number z1 of drive pins (26) being equal to the number N of grooves or a combinatorially possible subproduct of these prime factors.

**3.** Gearing series according to one of the preceding claims,
**characterised in that**
N/p is equal to the number z1 of the external rollers (26), so that only those grooves in which external rollers (26) are provided are formed and processed in the housing part (21, 22).

**4.** Gearing series according to one of the preceding claims,
**characterised in that**

the two-shaft, reverted planetary gearing stage comprises on the input side a rotating spider shaft.

5. Gearing series according to one of the preceding claims,
   **characterised in that**
   the two-shaft, reverted planetary gearing stage is constructed as an eccentric gearing stage.

6. Gearing series according to one of the preceding claims,
   **characterised in that**
   the two-shaft, reverted planetary gearing stage is constructed as a cycloid gearing stage, an eccentric being connected to the spider shaft and driving at least one cam plate, and **in that** in the pin-wheel gear as the drive pins there are provided a number $z_1$ of external rollers arranged in a circle, which interact with a number $z_2$ of teeth of the at least one cam plate and transmit the rotational movement of the latter to the output shaft, and which are mounted in a housing part with a number of grooves.

7. Gearing series according to one of the preceding claims,
   **characterised in that**
   within one size, in at least two variants the same housing part is provided with grooves for mounting the external rollers.

8. Gearing series according to one of the preceding claims,
   **characterised in that**
   the same external rollers are employed by both gearing stages.

9. Gearing series according to one of the preceding claims,
   **characterised in that**
   in at least one variant the output shaft is designed simultaneously as a cycloid-disc carrier of an additional cycloid gearing stage, to allow the two cycloid gearing stages to be connected without backlash.

10. Gearing series according to one of the preceding claims,
    **characterised in that**
    the variants of a subsequence with decreasing number $z_1$ have an increasing eccentricity of the cycloid gearing stage.

11. Gearing series according to one of the preceding claims,
    **characterised in that**
    the variants of a subsequence with decreasing number $z_1$ have decreasing diameters of the driving pins.

12. Gearing series according to one of the preceding claims,
    **characterised in that**
    the variants of a subsequence with decreasing number $z_1$ have a non-decreasing number of cam plates.

13. Gearing series according to one of the preceding claims,
    **characterised in that**
    the entire series provided for use, with the same revolving transmission ratio, comprises only variants with a difference $|z_1 - z_2|$ of smallest possible amount.

14. Gearing series according to one of the preceding claims,
    **characterised in that**
    when special sheaths are used in the case of first teeth numbers $z_1$ an internal gear is employed that has grooves to receive first thick external rollers with diameter d, and when additional teeth numbers $z_1$ greater than the first tooth numbers $z_1$ are present, the external rollers used are thinner than the first thick external rollers and are mounted in correspondingly thick sheaths with diameter d, so that the thick sheaths fit precisely into the grooves, in particular bores, in the internal gear that are provided to receive them.

15. Gearing series according to one of the preceding claims,
    **characterised in that**
    the output system (30) is constructed as either a parallel-pin mechanism with a transmission ratio of m = 1 or a parallel-crank mechanism which is kinematically equivalent to a parallel-pin mechanism,
    or
    a drive system according to the double-cross principle.

**16.** Gearing series according to one of the preceding claims,
**characterised in that**
the gearing stage of the planetary gearing type comprises a cycloid gearing and the planetary gear is constructed as a cam plate (21, 22).

**17.** Gearing series according to one of the preceding claims,
**characterised in that**
the planetary gear (21, 22) is constructed as a group of n identical planetary gears which are arranged on spider shafts or eccentrics (3, 3') offset from one another by 360°/n to reduce imbalances.

**18.** Gearing series according to one of the preceding claims,
**characterised in that**
the gearing series comprises a multiplicity of planetary gears (21, 22) which have substantially identical circumferential dimensions, in particular the same numbers $z_2$ of second teeth (25) and the same diameter but different thicknesses in order to support variously high torques, and/or **in that** the planetary gears (21, 22) are composed of a plurality of planetary gears (21, 22) in a stacked arrangement.

**19.** Gearing series according to one of the preceding claims,
**characterised in that**
the gearing series comprises a multiplicity of internal gears (2) with substantially identical internal circumferential dimensions, in particular the same number of grooves (29) and the same inside diameter but different thicknesses in order to support variously high torques, or **in that** the internal gears (2) are composed of a plurality of internal gears in a stacked arrangement.

**20.** Gearing series according to one of the preceding claims,
**characterised in that**
the housings (2) are constructed to allow the installation or attachment of additional gearing stages, in particular ahead of, between or after the existing gearing stages, and which comprise, in particular, angular, planetary, spur-wheel or spiroid-toothed gearing stages.

**21.** Gearing series according to one of the preceding claims,
**characterised in that**
a plurality of gearing stages are provided in a housing part with one internal gear (2) having the same number of grooves for at least two gearing stages.

**22.** Gearing series according to one of the preceding claims,
**characterised in that**
the arithmetic sequence is of mth order, e.g. (1, 2, 3 ...).

**23.** Gearing series according to one of the preceding claims,
**characterised in that**
the grooves (29) are constructed such that when external rollers (26) are omitted, the remaining external rollers (26) used can have a larger diameter.

**24.** Gearing series according to one of the preceding claims,
**characterised in that**
a multiplicity of eccentric elements (3, 3') are provided, which can be connected in a rotationally fixed manner to the first shaft (4) or are formed thereon, so that planetary gears (21, 22) having the same bearing dimensions can be mounted so as to have different eccentricities with respect to the first shaft (4).

**25.** Gearing series according to one of the preceding claims,
**characterised in that**
the first shaft (4) comprises a rotationally fixed connecting device (16) between a motor shaft (15) extending out of the housing (10) and a planetary gear carrier (17) mounted in the housing (10).

**26.** Gearing series according to one of the preceding claims,
**characterised in that**
the second shaft (5) is constructed as a planetary gear carrier for an additional planetary gearing stage.

**27.** Gearing series according to one of the preceding claims, **characterised in that** the planetary gearing is constructed as a cycloid gearing, and **in that** a multiplicity of output systems (30) are provided, which are constructed so as to transmit different maximum torques with quietness of running that decreases as the maximum torque rises.

**28.** Gearing series according to one of the preceding claims, **characterised in that** the drive system comprises driving pins (34) which in a parallel-pin mechanism are constructed as pins, in a parallel-crank mechanism as cranks, and in a drive system according to the double-cross principle as output drive pins.

**29.** Gearing series according to Claim 28, **characterised in that** a multiplicity of driving pins (34) with different diameters and eccentricities e of their axes are provided.

**30.** Gearing series according to one of the preceding claims, in particular according to one of Claims 28 and 29, **characterised in that** the driving pins (34) are provided in a number that is divisible by four.

**31.** Gearing series according to one of the preceding claims, in particular according to one of Claims 28 to 30, **characterised in that** as the number of external rollers (25) that are omitted increases, the driving pins (34) are constructed with progressively reduced diameter or an increased number n of cam plates (21, 22) are provided, which are arranged on eccentrics (3, 3') offset from one another by 360°/n, or **in that** there is a small difference $z_2$-$z_1$ between the numbers $z_1$, $z_2$ of teeth (25, 26) in the internal gear (2) and on the planetary gears (21, 22), respectively.

**32.** Gearing series according to one of the preceding claims, in particular according to one of Claims 28 to 31, **characterised in that** there are provided a multiplicity of driving pins (34) or cam plates (21, 22) or external rollers (26), made of materials of different strength and/or having surfaces of differing hardness.

**33.** Gearing series according to one of the preceding claims, **characterised in that** a multiplicity of external rollers (26) of different diameters are provided in the region in which they mesh with the teeth (25) of the planetary gears (21, 22), and can be inserted into the same grooves (29).

**34.** Gearing series according to one of the preceding claims, **characterised in that** the housings (10) comprise first housing covers (11), second housing covers (12) and, held between them, internal gears (2).

**35.** Gearing series according to Claim 34, **characterised in that** a multiplicity of first housing covers (11) are provided for the installation of different first shafts (4).

**36.** Gearing series according to one of Claims 34 and 35, **characterised in that** a multiplicity of first housing covers (11) are provided for the attachment of additional gearing stages.

**37.** Gearing series according to one of Claims 34 to 36, **characterised in that** a multiplicity of second housing covers (12) are provided for the installation of different second shafts (5).

**38.** Gearing series according to one of Claims 34 to 37, **characterised in that** a multiplicity of second housing covers (12) are provided for the attachment of different additional gearing stages.

**39.** Gearing series according to one of Claims 34 to 38, **characterised in that** a multiplicity of first housing covers (11) and of second housing covers (12) are provided for the installation of the same first shafts (4) and second shafts (5),
respectively, and for holding different internal gears (2).

40. Gearing series according to one of the preceding claims,
**characterised in that**
the grooves in the different variants are situated on a circle differing in size, in order to produce different eccentricities and to improve the quietness of running.

41. Method of manufacturing a gearing series according to one of the preceding claims in which
a multiplicity of internal gears of different inside diameters with grooves of equal size, or a multiplicity of planetary gears of different diameter with the same tooth shapes, are produced by means of the same tool.

42. Method according to Claim 41,
**characterised in that**
the production of internal gears or planetary gears involves the simultaneous production respectively of a plurality of internal gears stacked together or a plurality of planetary gears stacked together, in a single processing step.

43. Method according to Claim 42,
**characterised in that**
the simultaneously produced internal gears or planetary gears have different thickness dimensions.

**Revendications**

1. Gamme d'engrenages constituée d'une pluralité d'engrenages qui présentent chacun au moins un étage d'engrenage à la manière d'engrenages planétaires réversibles à deux arbres comprenant une combinaison d'un engrenage ouvert positif à denture à fuseaux et d'un système de sortie, comprenant
plusieurs tailles de construction, qui présentent respectivement des carters (10) dans lesquels sont disposées des couronnes (2) formées d'un nombre $z_0$ de rainures (29) et d'un premier nombre $z_1$ de galets extérieurs (26) montés dans ces rainures,
plusieurs variantes des tailles de construction afin de former différents rapports de démultiplication ou afin de transmettre différents couples maximaux entre un premier arbre (4) et un deuxième arbre (5) centré par rapport au premier, et/ou afin d'assurer différentes caractéristiques de régularité de fonctionnement,
avec des satellites (21, 22), notamment des cames disques, qui présentent chacun un deuxième nombre $z_2$ de dents (25) et qui sont liés en rotation au deuxième arbre (5) par l'intermédiaire du système de sortie (30),
sachant que le nombre $z_0$ de rainures (29) est un produit de plus de deux facteurs premiers et que les variantes comprennent respectivement des couronnes (2) dans le cas desquelles des galets extérieurs (26) sont montés dans les rainures à des intervalles équidistants respectivement différents, par l'omission régulière des galets extérieurs individuels (26), et sachant également que les rainures pour lesquelles les galets extérieurs sont omis sont réalisées au moins jusqu'à un degré de fabrication moindre, par exemple dans la pièce coulée.

2. Gamme d'engrenages selon la revendication 1, **caractérisée en ce que**, à l'intérieur d'une taille de construction,

    - au moins deux variantes présentent des nombres de dents $z_2$ différents,
    - au moins deux variantes présentent des nombres différents $z_1$ de fuseaux (26), sachant que pour ces variantes, le nombre $z_1$ de fuseaux (26) est égal au nombre N de rainures, ou est égal à un produit partiel combinatoirement possible de ces facteurs premiers.

3. Gamme d'engrenages selon l'une des revendications précédentes, **caractérisée en ce que** N / p est égal au nombre $z_1$ de galets extérieurs (26), de sorte que seules sont façonnées et usinées dans la partie de carter (21, 22) les rainures dans lesquelles sont prévus des galets extérieurs (26).

4. Gamme d'engrenages selon l'une des revendications précédentes, **caractérisée en ce que** l'étage d'engrenage planétaire réversible à deux arbres comprend du côté d'entrée un arbre nervuré rotatif.

5. Gamme d'engrenages selon l'une des revendications précédentes, **caractérisée en ce que** l'étage d'engrenage planétaire réversible à deux arbres est réalisé sous forme d'étage d'engrenage excentrique.

**6.** Gamme d'engrenages selon l'une des revendications précédentes, **caractérisée en ce que** l'étage d'engrenage planétaire réversible à deux arbres est réalisé sous forme d'étage d'engrenage cycloïdal, sachant qu'un excentrique qui entraîne au moins une came disque est relié à l'arbre nervuré, et **en ce qu'**il est prévu comme fuseaux pour la denture à fuseaux un nombre $z_1$ de galets extérieurs disposés en cercle, qui coopèrent avec un nombre $z_2$ de dents de la came disque au moins unique, dont les mouvements de rotation sont transmis sur l'arbre de sortie et qui sont montés dans une partie de carter ayant un certain nombre de rainures.

**7.** Gamme d'engrenages selon l'une des revendications précédentes, **caractérisée en ce que**, à l'intérieur d'une taille de construction, la même partie de carter avec des rainures pour recevoir les galets extérieurs est prévue pour au moins deux variantes.

**8.** Gamme d'engrenages selon l'une des revendications précédentes, **caractérisée en ce que** les mêmes galets extérieurs sont utilisés par les deux étages d'engrenage.

**9.** Gamme d'engrenages selon l'une des revendications précédentes, **caractérisée en ce que**, pour au moins une variante, l'arbre de sortie est conçu en même temps comme support de disque cycloïdal d'un autre étage d'engrenage cycloïdal, pour la liaison sans jeu des deux étages d'engrenage cycloïdaux.

**10.** Gamme d'engrenages selon l'une des revendications précédentes, **caractérisée en ce que** les variantes d'une séquence partielle avec un nombre $z_1$ décroissant présentent une excentricité croissante de l'étage d'engrenage cycloïdal.

**11.** Gamme d'engrenages selon l'une des revendications précédentes, **caractérisée en ce que** les variantes d'une séquence partielle avec un nombre $z_1$ décroissant présentent un diamètre décroissant des boulons entraîneurs.

**12.** Gamme d'engrenages selon l'une des revendications précédentes, **caractérisée en ce que** les variantes d'une séquence partielle avec un nombre $z_1$ décroissant présentent un nombre non décroissant de cames disques.

**13.** Gamme d'engrenages selon l'une des revendications précédentes, **caractérisée en ce que** l'ensemble de la gamme prévue pour l'utilisation comprend, pour une même démultiplication planétaire, uniquement des variantes avec une différence $[z_1 - z_2]$ du plus petit montant possible.

**14.** Gamme d'engrenages selon l'une des revendications précédentes, **caractérisée en ce que**, lors de l'utilisation de douilles spéciales, on installe pour des premiers nombres de dents $z_1$ une couronne avec des rainures pour recevoir des premiers galets extérieurs épais de diamètre d, et pour d'autres nombres de dents $z_1$ qui sont plus grands que les premiers nombres de dents $z_1$, on utilise des galets extérieurs plus minces que les premiers galets extérieurs épais, sachant que les galets extérieurs plus minces sont montés dans des douilles d'une épaisseur correspondante de diamètre d, de sorte que les douilles épaisses sont insérées en ajustement précis dans les rainures réceptrices, notamment les perçages, de la couronne.

**15.** Gamme d'engrenages selon l'une des revendications précédentes, **caractérisée en ce que** le système de sortie (30) est réalisé sous la forme soit d'une transmission à manetons à axes parallèles avec une démultiplication de m = 1, soit d'une transmission à manivelles à axes parallèles qui est cinématiquement équivalente à une transmission à manetons à axes parallèles,
soit d'un système d'entraînement selon le principe de la double croix.

**16.** Gamme d'engrenages selon l'une des revendications précédentes, **caractérisée en ce que** l'étage d'engrenage du genre engrenage planétaire comprend un engrenage cycloïdal, et le satellite est réalisé sous forme de came disque (21, 22).

**17.** Gamme d'engrenages selon l'une des revendications précédentes, **caractérisée en ce que** le satellite (21, 22) est réalisé sous la forme d'un groupe de n satellites identiques qui, afin de réduire les déséquilibres, sont disposés sur des arbres nervurés ou des excentriques (3, 3') mutuellement décalés de 360°/n.

**18.** Gamme d'engrenages selon l'une des revendications précédentes, **caractérisée en ce que** la gamme d'engrenages comprend une pluralité de satellites (21, 22) qui présentent des dimensions circonférentielles essentiellement identiques, notamment des nombres identiques $z_2$ de deuxièmes dents (25) et des diamètres identiques, mais des épaisseurs différentes afin de recevoir des couples de différents montants, et/ou **en ce que** les satellites (21, 22) sont composés de plusieurs satellites (21, 22) disposés en empilage.

19. Gamme d'engrenages selon l'une des revendications précédentes, **caractérisée en ce que** la gamme d'engrenages comprend une pluralité de couronnes (2) qui présentent des dimensions circonférentielles intérieures essentiellement identiques, notamment le même nombre de rainures (29) et le même diamètre intérieur, mais des épaisseurs différentes afin de recevoir des couples de différents montants, ou **en ce que** les couronnes (2) sont composées de plusieurs couronnes disposées en empilage.

20. Gamme d'engrenages selon l'une des revendications précédentes, **caractérisée en ce que** les carters (2) sont conçus pour incorporer ou rapporter des étages d'engrenage supplémentaires, notamment des étages d'engrenage antérieurs, intercalés ou postérieurs, qui comprennent notamment des étages d'engrenage angulaire, d'engrenage planétaire, d'engrenage droit ou d'engrenage à denture spiroïdale.

21. Gamme d'engrenages selon l'une des revendications précédentes, **caractérisée en ce que** plusieurs étages d'engrenage sont prévus dans une partie de carter avec une couronne (2) ayant le même nombre de rainures pour au moins deux étages d'engrenage.

22. Gamme d'engrenages selon l'une des revendications précédentes, **caractérisée en ce que** la suite arithmétique est d'ordre m, par exemple (1, 2, 3 ...).

23. Gamme d'engrenages selon l'une des revendications précédentes, **caractérisée en ce que** les rainures (29) sont conçues de telle sorte que, lorsqu'on omet des galets extérieurs (26), on peut utiliser comme galets extérieurs restants (26) des galets de diamètre agrandi.

24. Gamme d'engrenages selon l'une des revendications précédentes, **caractérisée en ce qu'**il est prévu une pluralité d'éléments excentriques (3, 3') qui peuvent être liés en rotation au premier arbre (4) ou qui sont formés sur ce dernier, de sorte qu'on peut monter des satellites (21, 22) ayant des dimensions de palier identiques avec des excentricités différentes par rapport au premier arbre (4).

25. Gamme d'engrenages selon l'une des revendications précédentes, **caractérisée en ce que** le premier arbre (4) comprend un dispositif (16) de liaison en solidarité de rotation entre un arbre de moteur (15) sorti du carter (10) et un porte-satellites (17) monté dans le carter (10).

26. Gamme d'engrenages selon l'une des revendications précédentes, **caractérisée en ce que** le deuxième arbre (5) est conçu comme porte-satellites pour un autre étage d'engrenage planétaire.

27. Gamme d'engrenages selon l'une des revendications précédentes, **caractérisée en ce que** l'engrenage planétaire est réalisé sous forme d'engrenage cycloïdal, et **en ce qu'**il est prévu une pluralité de systèmes de sortie (30) qui, afin de transmettre différents couples maximaux, sont conçus avec une régularité de fonctionnement diminuant avec l'augmentation du couple maximal.

28. Gamme d'engrenages selon l'une des revendications précédentes, **caractérisée en ce que** le système d'entraînement comprend des boulons entraîneurs (34) qui sont réalisés sous forme de manetons pour un transmission à manetons à axes parallèles, sous forme de manivelles pour une transmission à manivelles à axes parallèles, et sous forme de boulons de sortie pour un système d'entraînement selon le principe de la double croix.

29. Gamme d'engrenages selon la revendication 28, **caractérisée en ce qu'**il est prévu une pluralité de boulons entraîneurs (34) avec des diamètres différents et des excentricités différentes e de leurs axes.

30. Gamme d'engrenages selon l'une des revendications précédentes, notamment selon la revendication 28 ou 29, **caractérisée en ce que** les boulons entraîneurs (34) sont prévus en un nombre divisible par quatre.

31. Gamme d'engrenages selon l'une des revendications précédentes, notamment selon l'une des revendications 28 à 30, **caractérisée en ce que**, tandis qu'on augmente le nombre de galets extérieurs (25) omis, les boulons entraîneurs (34) sont réalisés avec un diamètre réduit ou il est prévu un nombre accru $n$ de cames disques (21, 22) qui sont disposées sur des excentriques (3, 3') mutuellement décalés de $360°/n$, ou en ce qu'il est prévu une petite différence $z_2 - z_1$ entre les nombres $z_1$, $z_2$ de dents (25, 26) respectivement dans la couronne (2) et sur les satellites (21, 22).

**32.** Gamme d'engrenages selon l'une des revendications précédentes, notamment selon l'une des revendications 28 à 31, **caractérisée en ce qu'**il est prévu une pluralité de boulons entraîneurs (34) ou de cames disques (21, 22) ou de galets extérieurs (26) en des matériaux de résistances différentes et/ou avec des surfaces de duretés différentes.

**33.** Gamme d'engrenages selon l'une des revendications précédentes, **caractérisée en ce qu'**il est prévu une pluralité de galets extérieurs (26) de diamètres différents dans la région dans laquelle ils engrènent avec les dents (25) des satellites (21, 22), et qui peuvent être installés dans les mêmes rainures (29).

**34.** Gamme d'engrenages selon l'une des revendications précédentes, **caractérisée en ce que** les carters (10) comprennent des premiers couvercles de carter (11), des deuxièmes couvercles de carter (12) et des couronnes (2) maintenues entre ces couvercles.

**35.** Gamme d'engrenages selon la revendication 34, **caractérisée en ce qu'**il est prévu une pluralité de premiers couvercles de carter (11) pour incorporer différents premiers arbres (4).

**36.** Gamme d'engrenages selon la revendication 34 ou 35, **caractérisée en ce qu'**il est prévu une pluralité de premiers couvercles de carter (11) pour rapporter des étages d'engrenage supplémentaires.

**37.** Gamme d'engrenages selon l'une des revendications 34 à 36, **caractérisée en ce qu'**il est prévu une pluralité de deuxièmes couvercles de carter (12) pour incorporer différents deuxièmes arbres (5).

**38.** Gamme d'engrenages selon l'une des revendications 34 à 37, **caractérisée en ce qu'**il est prévu une pluralité de deuxièmes couvercles de carter (12) pour rapporter différents étages d'engrenage supplémentaires.

**39.** Gamme d'engrenages selon l'une des revendications 34 à 38, **caractérisée en ce qu'**il est prévu une pluralité de premiers couvercles de carter (11) et de deuxièmes couvercles de carter (12) pour incorporer respectivement les mêmes premiers arbres (4) et les mêmes deuxièmes arbres (5) et pour maintenir différentes couronnes (2).

**40.** Gamme d'engrenages selon l'une des revendications précédentes, **caractérisée en ce que**, dans les différentes variantes, les rainures sont situées sur un cercle de taille différente afin de produire une excentricité de montant différent et afin d'améliorer la régularité de fonctionnement.

**41.** Procédé de fabrication d'une gamme d'engrenages selon l'une des revendications précédentes, sachant qu'on fabrique au moyen du même outil une pluralité de couronnes de diamètre intérieurs différents avec des rainures de taille identique, ou une pluralité de satellites de diamètres différents avec des formes de dents identiques.

**42.** Procédé selon la revendication 41, **caractérisé en ce que**, lors de la fabrication de couronnes ou de satellites, on fabrique simultanément en une seule opération plusieurs couronnes en empilage ou respectivement plusieurs satellites en empilage.

**43.** Procédé selon la revendication 42, **caractérisé en ce que** les couronnes ou satellites simultanément fabriqués présentent des dimensions d'épaisseur différentes.

Fig. 1

Fig. 2

Fig. 3

EP 1 419 325 B1

Fig. 4

Fig. 5

EP 1 419 325 B1

Fig. 7

Fig. 6

Fig. 8

Fig. 9

EP 1 419 325 B1

Fig. 10

z1=44
z2=40

Fig. 11

z1=44
z2=41

Fig. 12

z1=44
z2=43

Fig. 13

z1=44
z2=43

e

34

21,22

28

26

25

Fig. 14

z1=44
z2=43

e

Fig. 15

z1=44
z2=43

e

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0687837 A
- EP 0556587 A
- US 5292289 A

**In der Beschreibung aufgeführte Nicht-Patentliteratur**

- **H. W. Müller.** Die Umlaufgetriebe. Springer Verlag, 1998